# EUROPEAN PATENT SPECIFICATION

(11) **EP 2 983 330 B1**
(45) Date of publication and mention of the grant of the patent: **05.06.2024**
(21) Application number: 15183061.9
(22) Date of filing: 25.05.2005
(51) Int. Cl.: H04N 7/173, H04L 12/28, H04N 7/16, H04J 1/00, H04L 61/5014, H04N 21/81, H04N 21/643, H04N 21/426

(54) **WIDEBAND SERVICE PROVISIONING**
BEREITSTELLUNG VON BREITBANDDIENST
FOURNITURE DE SERVICES À LARGE BANDE

(30) Priority: 25.05.2004 US 574506 P; 26.05.2004 US 574876 P; 22.06.2004 US 582732 P; 16.07.2004 US 588635 P; 23.07.2004 US 590509 P; 25.10.2004 US 622312 P; 01.11.2004 US 624490 P; 13.12.2004 US 635995 P; 23.05.2005 US 135777; 24.05.2005 US 137606
(43) Date of publication of application: 10.02.2016
(62) Divisional of application: 05753969.4
(73) Proprietor: Cisco Technology, Inc., San Jose, CA 95134-1706 (US)
(72) Inventor: CHAPMAN, John T., Saratoga, CA 95070 (US); BERNSTEIN, Alon Shlomo, Sunnyvale, CA 94087 (US); ZHANG, Jin, Sunnyvale, CA 94087 (US); GUCKEL, William, Boxborough, MA 01719 (US); ZENG, Shengyou, Concord, MA 01742 (US); FOX, David B., Bolton, MA 01740 (US); SLANE, Albert A., Cottage Grove, WI 53527 (US)
(74) Representative: Mathys & Squire

(56) References cited:
- US-A1- 2002 131 426
- US-A1- 2002 133 618
- "Transmission systems for interactive cable television services; J.112 Annex B (03/04); Data-over-cable service interface specifications: Radio-frequency interface specification", ITU-T STANDARD IN FORCE (I), INTERNATIONAL TELECOMMUNICATION UNION, GENEVA, CH, no. J.112 Annex B (03/04, 15 March 2004 (2004-03-15), XP017401767,
- "Data-Over-Cable Service Interface Specifications Radio Frequency Interface Specification; ETSI ES 201 488", IEEE, LIS, SOPHIA ANTIPOLIS CEDEX, FRANCE, vol. BC, no. V1.1.1, 1 November 2000 (2000-11-01), XP014004350, ISSN: 0000-0001
- John T Chapman: "The Wideband Protocol for a DOCSIS Network Written by: The Wideband Protocol for a DOCSIS Network By", , 14 January 2005 (2005-01-14), XP055231700, Retrieved from the Internet: URL:http://www.johntchapman.com/Wideband-D OCSIS-ET2005-WP-041112a.pdf
- JONES YAS CORPORATION R WOUNDY CISCO D: "Addition of Device Class to Agent Options; draft-ietf-dhc-agentoptions-device-class-0 3.txt", ADDITION OF DEVICE CLASS TO AGENT OPTIONS; DRAFT-IETF-DHC-AGENTOPTIONS-DEVICE-CLASS-0 3.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. dhc, no. 3, 1 October 2001 (2001-10-01), XP015016878,

## Description

### TECHNICAL FIELD

The technicalfield of the invention is data over cable service interface specification, DOCSIS.

### BACKGROUND OF THE INVENTION

The Internet has changed society and is as much a part of modem culture as television and telephones. People are becoming increasingly connected to share and access information. This interconnectivity promotes improvements in the computing and communication infrastructure.

Much of this infrastructure was designed for entertainment or communications but is being adapted to deliver general data. The addition of general information and data transmission over the legacy infrastructure has necessarily been somewhat restrained by the need for the infrastructure to continue its initial functions. Furthermore, legacy technical characteristics of this infrastructure influence the various solutions to include information storage and transmission. Most major entertainment and communication channels now include computer networking capabilities.

Many people get their television service through cable television (CATV). CATV was initially developed to deliver television signals to areas where antennas had difficulty picking up television broadcasts. Coaxial cabling is the primary type of cabling used by the .cable television industry because it is much less susceptible to interference and can carry large amounts of data.

Television signals are broadcast in 6 MHz channels and this channel bandwidth was incorporated into cable television. As transmission demands increased, parts of the coaxial backbone were replaced with optical fiber to create a hybrid fiber-coaxial (HFC) network. The bandwidth of the cable infrastructure makes it an attractive technology to incorporate data transmission.

An example use of data over a cable television network was approved by the International Telecommunications Union (ITU) which includes interface requirements for high speed data communication, and is called the data over cable service interface specification (DOCSIS). Cable service providers also offer internet service through the cable television network in 6 MHz channels for downstream data. Upstream data has historically received less bandwidth and has been offered in a fraction of a channel, such as in 2 MHz provisions. This asymmetry was due to the Internet initially being an information provider. Currently, peer-to- peer computing, file sharing, gaming, and other uses have increased the need for upstream bandwidth.

Due to the legacy CATV infrastructure primarily being a broadcast channel, there are different modulation schemes for upstream and downstream transmission, for example, downstream utilize 64 and 256 Quadrature Amplitude Modulation (QAM) and upstream utilizes Quadrature Phase Shift Keying or 16 QAM. Furthermore, to allow maximum data transmission through different networks, DOCSIS supports use of various combinations of modulation and therefore different data rates, which in turn complicates the physical layer in these networks.

Placing upstream and downstream data onto the cable television network requires special equipment at each end of the HFC plant. On the customer end, a cable modulator/demodulator (cable modem, or CM) transmits and receives data over the cable television infrastructure and on the cable provider end a cable modem termination system (CMTS) is used to place and retrieve data from the cable television network.

Typically a CMTS broadcasts to numerous CMs over a shared channel while each CM separately sends upstream data. In this framework, a cable modem must select only the broadcast downstream data that is intended for it while it must follow an arbitration protocol to avoid data collisions with other cable modems while transmitting upstream data. Cable modems are identified by Service Identifiers (SIDs). SIDs are used as a BPI (baseline privacy) index on the downstream (DS) and also to designate upstream data to certain CMs for the CMTS on the upstream (US).

The upstream bandwidth is allocated by a CMTS and is shared among multiple CMs. Upstream transmissions are divided into mini-slots which may carry up to 1024 bytes, but in practice often contain considerably less bytes to conserve bandwidth. The arbitration protocol for upstream transmissions is assigned by a CMTS in response to requests by CMs. The CMTS communicates these assignments to each cable modem with a media access control (MAC) packet called a mini-slot allocation packet (MAP).

What is needed is a method and apparatus to satisfy the requirements of peer-to-peer computing, file sharing, distributed computing, gaming, and other applications which have an increased need for upstream bandwidth. A wideband cable system may be employed to improve downstream or upstream cable service, and further to provision and configure a wideband cable functionality.

Upstream bandwidth is limited. What is needed is a method and apparatus to satisfy the requirements of peer-to-peer computing, file sharing, distributed computing, gaming, and other applications which have an increased need for upstream bandwidth.

Additionally, cable networks have been traditionally used to transmit video to users through their cable set-top boxes. The transmissions originate at a head-end, generally at a central location provided by the cable network provider. The transmission is received at the user end by a cable set-top box.

Using the infrastructure already established for the cable network, cable network providers began providing data services to users. With the use of a cable modem, users can transmit and send data across the network to other networks, such as packet-based networks like the Internet. The transmission travels upstream from the cable modem to the head-end, or a hub, where it is terminated by a CMTS.

The CMTS then transmits the data out of the hub or head end to the packet network. The CMTS also transmits the data from the packet network to the cable modem. The transmissions are generally across channels established within the spectrum available for transmissions. The channels are QAM, sometimes referred to as QAMs or narrow-band channels.

It is possible to create a higher bandwidth channel by grouping several QAMs together. Essentially, the higher bandwidth channel, sometimes referred to as a wideband or bonded channel, is an overlay on the narrow-band QAMs. This allows the existing narrowband infrastructure to be used for wideband transmissions. The data is transmitted in bundles across the QAMs. In order to implement this type of scheme, however, the downstream equipment needs a means to reconstruct the transmissions.

WO 2004/006503 discloses a method with dynamic port configuration of network equipment for communication in a broadband network. A central managing database in connection with a Dynamic Host Configuration Protocol server keeps templates with recordings of network equipment parameters for their physical port settings and deployed services. WO 02/42882 discloses an apparatus for processing simple network management protocol object identifiers in a network management file. The objects are classified as to scalar or tabular values and further classified according to the number of digits in each object identifier and the number of unlike values within the digits. Packet data units are then created incorporating similar object types. Each packet data unit is then individually processed. By first classifying and then processing the SNMP objects, the impact of corrupted or erred objects on the network management process is minimized. US 2002/131426 discloses a aggregating a plurality of physical channels to a single logical channel, a scalable virtual channel (SVC), which may be implemented in a point to multipoint communications system. US 2002/133618 discloses an apparatus for sending data from a transmit site to a receive site which includes dividing a transmit data stream having a first bit rate into multiple data streams with each of the multiple data streams having a bit rate which is lower than the first bit rate, transmitting each of the multiple data streams over a plurality of RF channels and recombining the multiple data streams at the receive site to provide a receive data stream having a bit rate equal to the first bit rate. ITU-T Recommendation J.112 - Annex B relates to Data-over-cable service interface and Radio-frequency interface specifications. ETSI ES 201 488 V1.1.1 also relates to Data-over-cable service interface and Radio-frequency interface specifications. A paper entitled "The Wideband Protocol for a DOCSIS Network" by John Chapman published in 2005 describes the Wideband protocol for a DOCSIS network to allow DOCSIS to increase in bandwidth by a factor of 10 times. The Internet Draft publication <draft-ietf-dhc-agentoptions-device-class-03.txt>, also entitled Addition of Device Class to Agent Options, by Jones et al, which is available through the IETF proposes a new sub-option to the DHCP Relay Information Agent Option. This new sub-option is for use with DOCSIS cable modems and describes a "device class" to which the cable modem belongs. The cable modem signals its device class information to the Relay Agent using DOCSIS signalling, and the Relay Agent forwards the device class information to the DHCP Server which can then make a policy decision based on it.

### SUMMARY OF THE INVENTION

The invention is defined by the appended claims. Any embodiments described herein which do not fall within the scope of the claims are to be interpreted as examples.

### BRIEF DESCRIPTION OF THE DRAWINGS

Embodiments of the invention may be best understood by reading the disclosure with reference to the drawings, wherein:
FIG. 1 illustrates a cable network that may provide a wideband cable service.
FIG. 2 illustrates a wideband modem registration.
FIG. 3 illustrates a double registration for a cable modem.
FIG. 4 illustrates an embodiment of a wideband cable modem termination server.
FIG. 5 illustrates an alternative embodiment of a wideband cable modem termination server.
FIG. 6 illustrates an example wideband cable modem.
FIG. 7 illustrates a flow diagram showing a method for provisioning wideband cable.
FIG. 8 illustrates a provisioning server according to an embodiment of the present invention.
FIG. 9 illustrates a flow diagram showing a method for provisioning wideband cable.
FIG. 10 illustrates a flow diagram showing a method for provisioning wideband cable.
FIG. 11 illustrates example TLVs for upstream configuration.
FIG. 12 illustrates additional MAC management message types that may be used in wideband provisioning.
FIG. 13 illustrates example TLVs for downstream configuration.
FIG. 14 illustrates a cable modem and cable modem termination station with requests and a mini-slot allocation packet comprising grants for a wideband cable upstream protocol.
FIG. 15 illustrates a streaming protocol comprising packets with requests and upstream grants.
FIG. 16 illustrates a buffer example with disassociated requests and grants.
FIG. 17 illustrates an upstream portion of a wideband cable modem including multiple packet streaming queues (PSQs).
FIG. 18 illustrates a wideband upstream tunnel and reassembly engine.
FIG. 19 illustrates an apparatus with a upstream request grant state machines and a packet streaming queue request grant state machine.
FIG. 20 illustrates hierarchical queueing as provided by embodiments of the present invention.
FIG. 21 illustrates an embodiment of a wideband cable network.
FIG. 22 illustrates an alternative embodiment of a wideband cable network.
FIG. 23 illustrates a block diagram of a wideband downstream channel.
FIG. 24 illustrates a block diagram of a wideband downstream header.
FIG. 25 illustrates a block diagram of a multilink extended header.
FIG. 26 illustrates an embodiment of multiplexed wideband downstream channels.

### DETAILED DESCRIPTION

In the following description, numerous specific details are set forth. However, it is understood that embodiments of the inventions may be practiced without these specific details. In other instances, well-known circuits, structures, and techniques have not been shown in detail in order to not obscure the understanding of this description.

Reference in the specification to "one embodiment" or "an embodiment", etc., means that a particular feature, structure, or characteristic described in connection with the embodiment is included in at least one aspect of the invention. The appearances of the phrase "in one embodiment" in various places in the specification do not necessarily all refer to the same embodiment.

Generally, a wideband protocol may be developed for cable communication. To enable a wideband protocol, different devices in a cable network must be configurable to provide wideband service. For example, this configuration may occur at the same time as conventional cable modem registration or may occur separately. In an embodiment a provisioning server contains a configuration file that is used to provision service to a cable modem and the service may be negotiated during a registration between the cable modem and provisioning server. In some embodiments a configuration file may be- changed with dynamic service messages.

Due to the different architectures for upstream and downstream transmissions in a cable network and cable devices, different methods may be used to provide wideband functionality. For downstream communications to a cable modem, narrowband channels may be bonded together to form a wideband channel. For upstream communications from a cable modem, identifiers may be placed into discrete portions of a data flow, and can therefore distribute the data in a streaming fashion over one or multiple channels.

To ensure reverse compatibility and a more robust design, a wideband architecture includes narrowband functionality. The ability for any wideband component or protocol to function in a narrowband manner allows redundant use of configuration information, as stated above, this information may be obtained separately or at the same time.

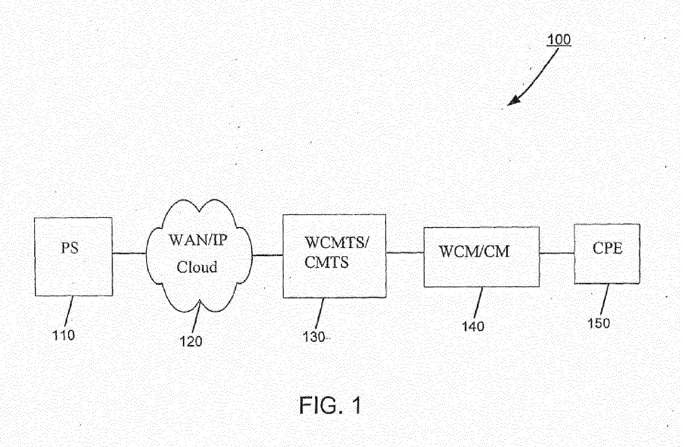

FIG. 1 illustrates a cable network 100 that may provide a wideband cable service. Provisioning server 110 couples with a wideband capable CMTS 130 through a packet switched network such as WAN/IP Cloud 120. In an embodiment the provisioning server and CMTS may reside in the same device. In some embodiments, the CMTS 130 comprises both wideband CMTS (WCMTS) and conventional CMTS functionality. In other embodiments the WCMTS and CMTS may be in separate devices. Cable network 100 also includes a CM 140 that may comprise a wideband CM (WCM). The CM and the WCM may be in a single device or in different devices. CM 140 is typically coupled with CMTS 130 through a HFC plant, but may also be coupled by a simple coaxial connection or any other connection. Consumer premises equipment (CPE), such as a personal computer or other device capable of coupling with a CM 140, is coupled with CM 140 and may receive or send data, video, audio, or other information, over the cable network 100.

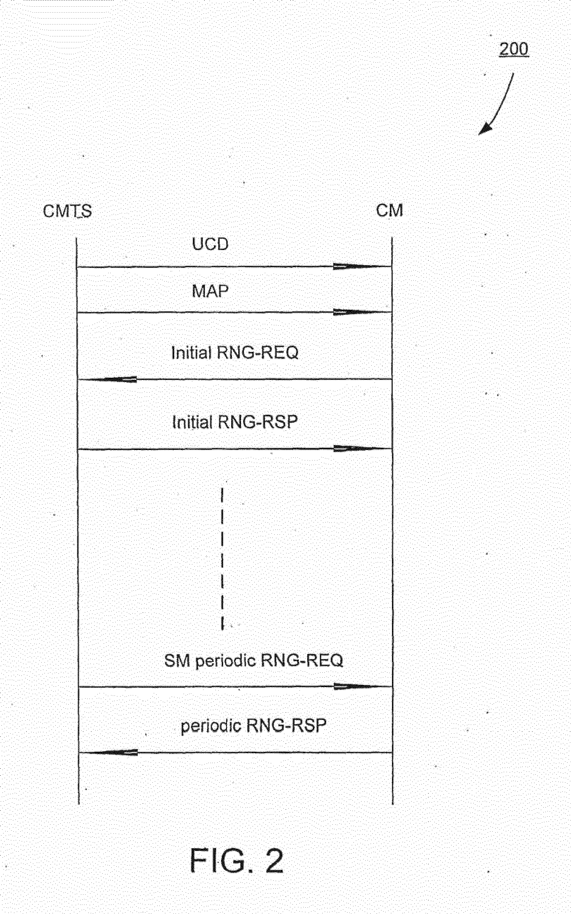

FIG. 2 represents a portion of a modem registration. Some embodiments may use a double registration where they register narrowband and wideband separately, and other embodiments may use a single registration where both are done in one registration procedure.

In FIG. 2, a CMTS may send upstream channel descriptors (UCDs) to define the characteristics of an embodiment upstream channel. A CM may pick a UCD, for example UCD 1, and then receive MAP messages, which allocate the upstream physical layer (PHY). Once map messages are received, a CM may send an initial maintenance message such as a range request (RNG-REQ) and the CMTS may reply with a range response (RNG-RSP). So far this illustrates a DOCSIS registration. Conventionally at this stage, there would be a trivial file transfer protocol exchange (TFTP), a dynamic host configuration protocol (DHCP) exchange to dynamically assign an IP address, a time of day (TOD) exchange, and perhaps other conventional exchanges. In an embodiment a cable modem may go directly into station maintenance.

Referring to FIG. 2, there is a station maintenance periodic RNG-REQ, a periodic RNG-RSP, and a keep-alive function (not shown). In one embodiment TFTP, DHCP, time of day, etc., may be skipped when all the information needed to register a modem is already gathered. For example, a cable modem will not need to register each one of a plurality of upstreams and have a different set of TFTP and DHCP's per upstream if it already has all the relevant information from another registration.

A double registration modem may have a narrowband registration and a wideband registration. Therefore a wideband registration file may already contain all the information needed to bring multiple downstreams online as well as all the information needed for a service flow for the upstream.

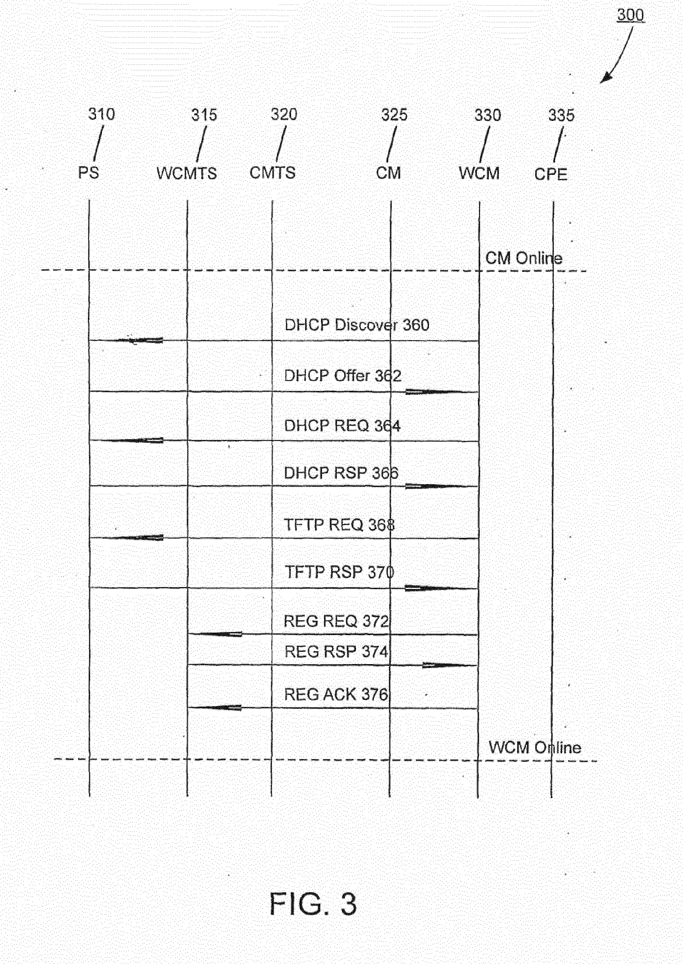

FIG. 3 illustrates the second part of a double registration 300 for a cable modem. Double registration 300 shows the communications between a provisioning server 310, a WCMTS 315, a CMTS 320, a CM 325, a WCM 330 and a CPE 335. In FIG. 3, the WCMTS 315 and CMTS 320 are shown as separate, but may reside in the same or separate devices. Furthermore, CM 325 and WCM 330 are shown separately but may reside in the same devices. Generally, FIG. 3 represents cable modem registration by showing different functional components typically involved in registration as well as additional wideband components, but the components are not necessarily restricted to being separate as shown, and in fact, many of them may exist within the same device.

Double registration 300 shows a cable modem 325 already online. In the double registration 300 shown in FIG. 3, after the cable modem is online a DHCP exchange happens. In an embodiment, a WCM 330 may use the same IP address space as a standard CM, this allows the WCM 330 to use the same DHCP procedure to procure an IP address. The WCM 330 sends a DHCP discover 360 to the provisioning server 310. Provisioning server-310 sends a DHCP offer 362 to WCM 330 in response to the DHCP discover 360. WCM 330 then sends a DHCP request 364 to the provisioning server 310. The provisioning server 310 responds with a DHCP response 366 to the WCM 330.

In one embodiment, a WCM 330 identifies itself as being wideband capable- during the configuration process. This allows a DOCSIS TFTP provisioning server to enable or disable wideband mode, and to choose the appropriate configuration parameters for the CM.

In the present embodiment, after the DHCP exchange happens, WCM 330 sends a TFTP request 368 to the provisioning server 310. The provisioning server 310 responds with a TFTP response 370. After the TFTP exchange between the WCM 330 and the provisioning server 310, the WCM 330 and the WCMTS 315 communicate directly. The WCM 330 sends a registration request 372 to WCMTS 315 comprising a configuration file. The WCMTS 315 responds with a registration response 374. After the registration response 374, WCM 330 sends a registration acknowledgment 376 and the WCM 330 is online. Referring back to cable network 100 in FIG. 1, the provisioning server 110, CMTS 130 and CM 140 will now be described in more detail.

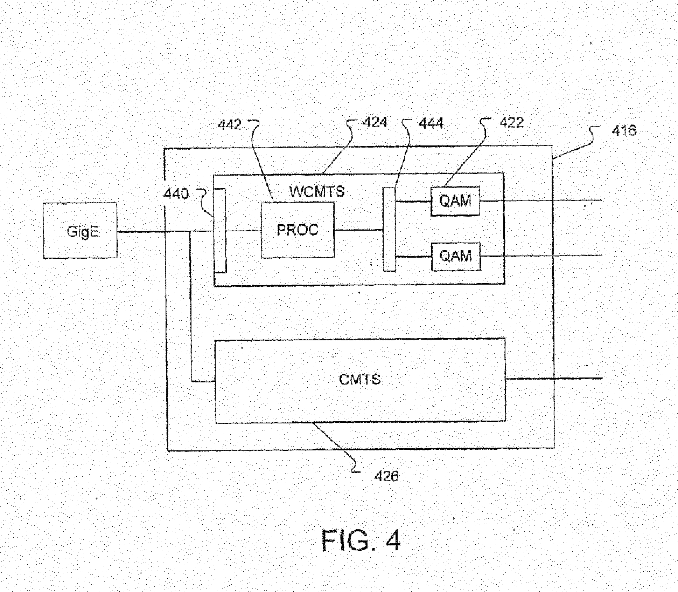

FIG. 4 illustrates an embodiment of a wideband cable modem termination server. In this particular embodiment, the QAMs 422 are shown as residing with the CMTS. As mentioned above, this may not be the case. Also, the WCMTS 416 may actually be comprised of a regular or narrowband CMTS 426 and a wideband CMTS 424. This is not a necessary configuration, as the two different types of CMTSs may be in separate devices, but may also provide some convenience in allowing both narrowband and wideband data to be handled by the same box.

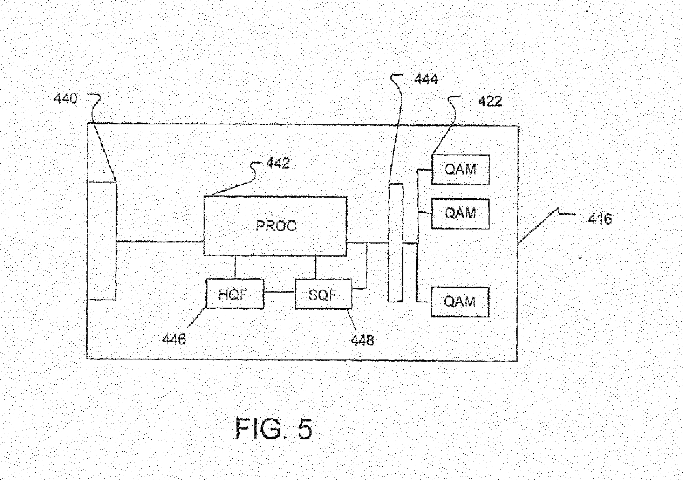

The configuration shown as 416 in FIG. 4 is an embodiment of a wideband-narrowband CMTS. An embodiment of a configuration of a standalone wideband CMTS is shown in FIG. 5. The embodiment of FIG. 5 includes QAMs 422, but as mentioned above, this is one alternative embodiment. The wideband device will more than likely perform the same functions whether it is in a wideband-narrowband device or a standalone wideband CMTS, and will be discussed here with regard to FIG. 4.

The data is received from the GigE switch and sent to either the WCMTS or the CMTS depending upon the destination of the data. The WCTMS then receives the data through an interface compatible with the GigE data. In order to differentiate between the incoming and outgoing interfaces, the incoming interface or communications port will be referred to as communicating with the data network.

A processor 442 receives the data from the data network, such as Ethernet frames. Ethernet frames refer to the data received in a format compatible with the Institute of Electrical and Electronic Engineers standard 802.3. The frames are then converted into DOCSIS packets and transmitted across the cable interface 444 to the QAMs 422. A wideband CMTS may use several narrowband channels to transmit data in the downstream. In one embodiment, a wideband channel is a collection of narrowband channels bonded together, and may be referred to as channel bonding.

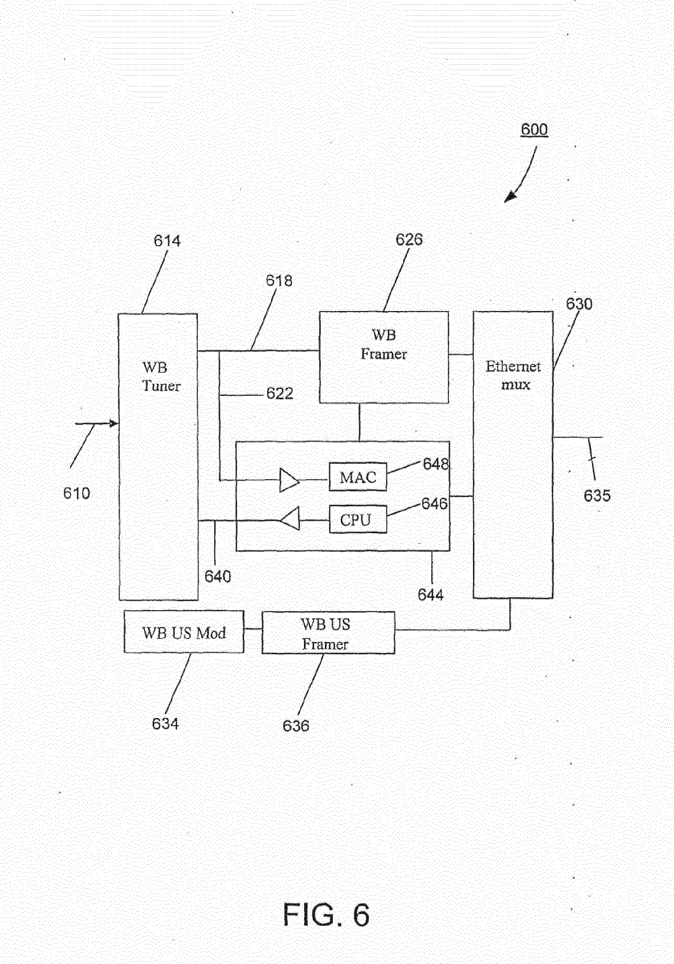

FIG. 6 illustrates an embodiment cable modem 600, in this case a cable modem with built in wideband functionality. The present embodiment may use hardware 644, such as a DOCSIS capable chip, that comprises a MAC 648 and a processing device, for example CPU 646. CPU 646 may be coupled with bus 640 to the wideband tuner 614. The MAC 648 may be coupled to bus 622 and therefore coupled with a tuner such as wideband tuner 614, and may receive conventional narrow band data over bus 622. In an embodiment bus 622 can branch from bus 618. In an embodiment bus 618 may comprise 16 channels. Bus 618 may be coupled to a wideband tuner 614 which may send and receive RF signals at 610. In the present embodiment, bus 618 couples wideband tuner 614 with a wideband framer 626. The wideband framer may then couple with an Ethernet multiplexer 630 which in turn may be connected to the DOCSIS capable chip 644. The Ethernet multiplexer 630 may also be coupled with a wideband upstream framer 636 which is coupled to a wideband upstream modulator.

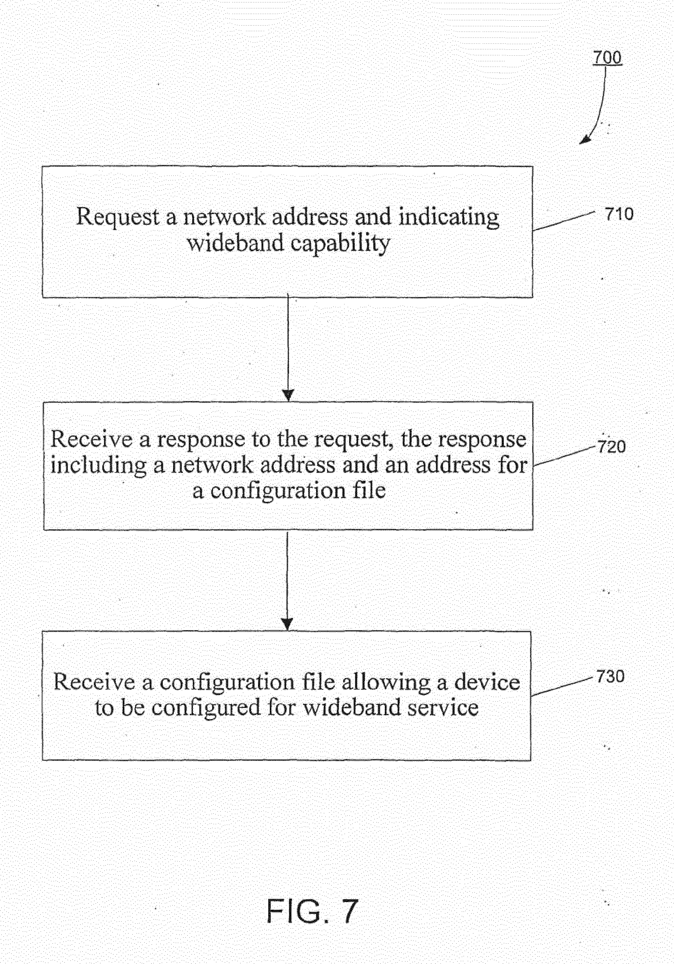

FIG. 7 illustrates a flow diagram showing a method 700 for provisioning wideband cable. An embodiment may comprise a method of requesting a network address and indicating wideband capability at block 710, receiving a response to the request at block 720, the response including a network address and an address for a configuration file, and receiving a configuration file that allowing a device to be configured for wideband service at block 730.

In an embodiment, wideband capability is indicated by a dynamic host configuration protocol (DHCP) option 82. The DHCP relay agent information option (option 82) enables a Dynamic Host Configuration Protocol (DHCP) relay agent to include information about itself when forwarding client-originated DHCP packets to a DHCP server. The DHCP server can use this information to implement IP address or other parameter-assignment policies.

In some embodiments, receiving a configuration file that allows wideband service further comprises using a trivial file transfer protocol (TFTP).

In yet another embodiment, receiving a configuration file that allows wideband service further comprises receiving a configuration file with a time length value that enables wideband capability.

One embodiment may be a cable modem including a port to request a network address and indicate wideband capability, and a processor coupled with the port, the processor to receive a response to the request, the response to include a network address and an address for a configuration file, and receive a configuration file to allow the cable modem to be configured for wideband service.

In an embodiment, the indication of wideband capability is indicated by a dynamic host configuration protocol (DHCP) relay agent information option 82. In some embodiments, the configuration file that allows wideband service is to be provided with a trivial file transfer protocol (TFTP). In yet another embodiment, the configuration file further comprises a time length value that enables wideband capability.

An embodiment may be a cable modem including means for requesting a network address and indicating wideband capability, means for receiving a response to the request, the response including a network address and an address for a configuration file, and means for receiving a configuration file that allowing the cable modem to be configured for wideband service. In an embodiment, the means for requesting further comprises means for detecting a dynamic host configuration protocol (DHCP) relay agent information option 82 allowing a cable modem to indicate to a provisioning server that it is capable of running in a wideband mode. In an embodiment, the means for receiving a configuration file further comprises means for using a trivial file transfer protocol (TFTP). In yet another embodiment, the means for receiving a configuration file further comprises means for using a configuration file with a time length value that enables wideband capability.

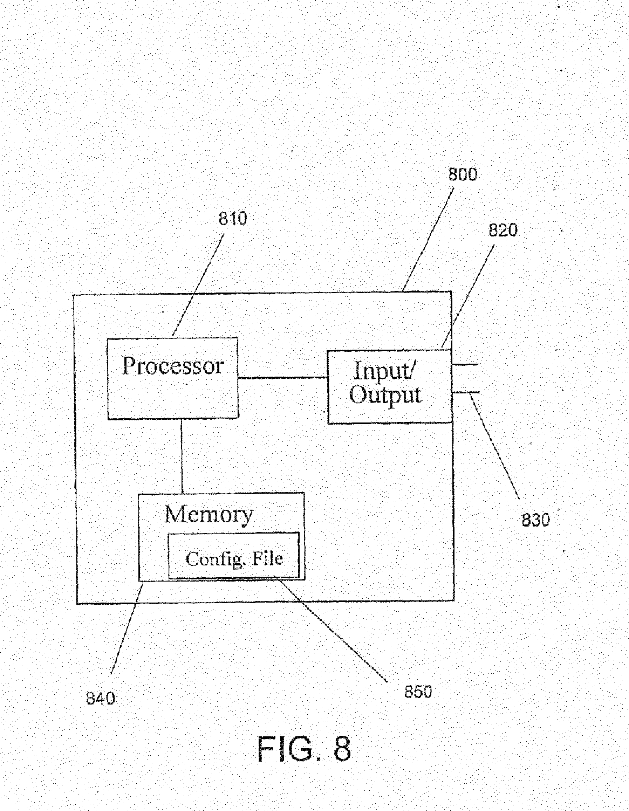

FIG. 8 illustrates a provisioning server 800 according to an embodiment of the present invention. Provisioning server 800 includes a processor 810, a memory 840 and an input and output (I/O) 820 coupled to a port 830. Memory 840 may store at least one configuration file 850, such as the example configuration file above, that the processor 810 may access and allow the server to provision cable modem services.

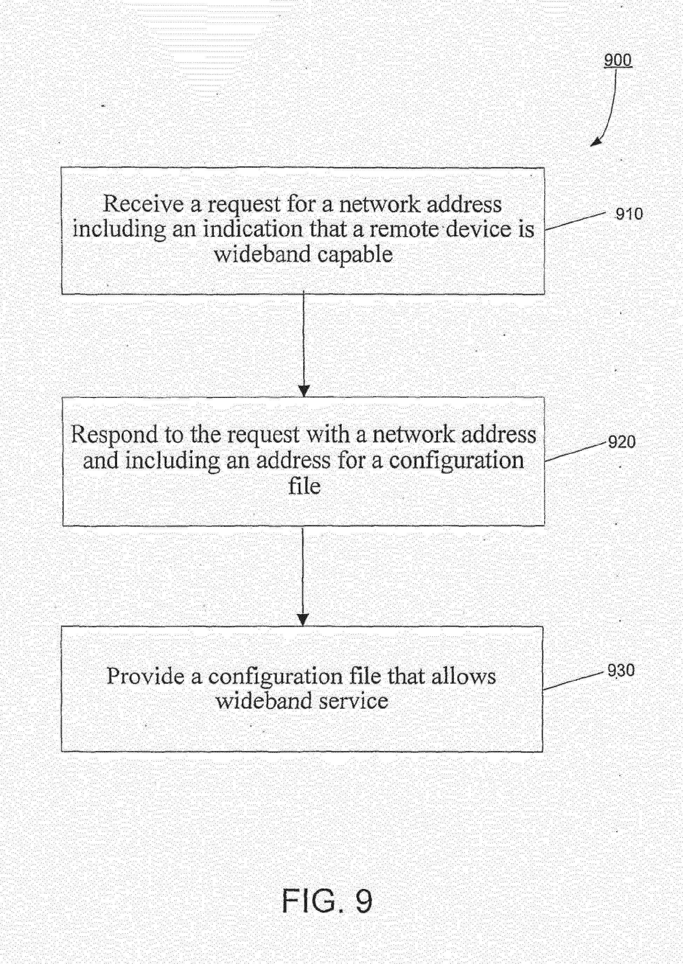

FIG. 9 illustrates a flow diagram showing a method 900 for provisioning wideband cable. One embodiment may comprise a method of provisioning wideband cable service including receiving a request for a network address including an indication that a remote device is wideband capable at block 910, responding to the request with a network address and including an address for a configuration file at block 920, and providing a configuration file that allows wideband service at block 930.

The present embodiment includes an indication that a remote device is wideband capable by indicating with a dynamic host configuration protocol (DHCP) relay agent information option 82 thus allowing a cable modem to indicate to a provisioning server that it is capable of running in a wideband mode. An embodiment provides a configuration file that allows wideband service further comprises using a trivial file transfer protocol (TFTP). An embodiment provides a configuration file that allows wideband service and comprises a configuration file with a time length value that enables wideband capability

An embodiment may comprise a provisioning server that includes a port to receive a request for a network address including an indication that a remote device is wideband capable. The present provisioning server also includes a processor to respond to a request with a network address and include an address for a configuration file and to provide a configuration file that allows wideband service. An embodiment indicates wideband capability with a dynamic host configuration protocol (DHCP) relay agent information option. In an embodiment, the configuration file that allows wideband service is provided with a trivial file transfer protocol (TFTP). In an embodiment, the configuration file further comprises a time length value that enables wideband capability.

An embodiment may comprise a provisioning server including means for receiving a request for a network address including an indication that a remote device is wideband capable, means for responding to the request with a network address and including an address for a configuration file, and means for providing a configuration file that allows wideband service. In some embodiments, the means for receiving a request further comprises means for detecting a dynamic host configuration protocol (DHCP) relay agent information option allowing a cable modem to indicate to a provisioning server that it is capable of running in a wideband mode. In an embodiment, the means for providing a configuration file further comprising means for using a trivial file transfer protocol (TFTP). In yet another embodiment, the means for providing a configuration file further comprising means for using a configuration file with a time length value that enables wideband capability.

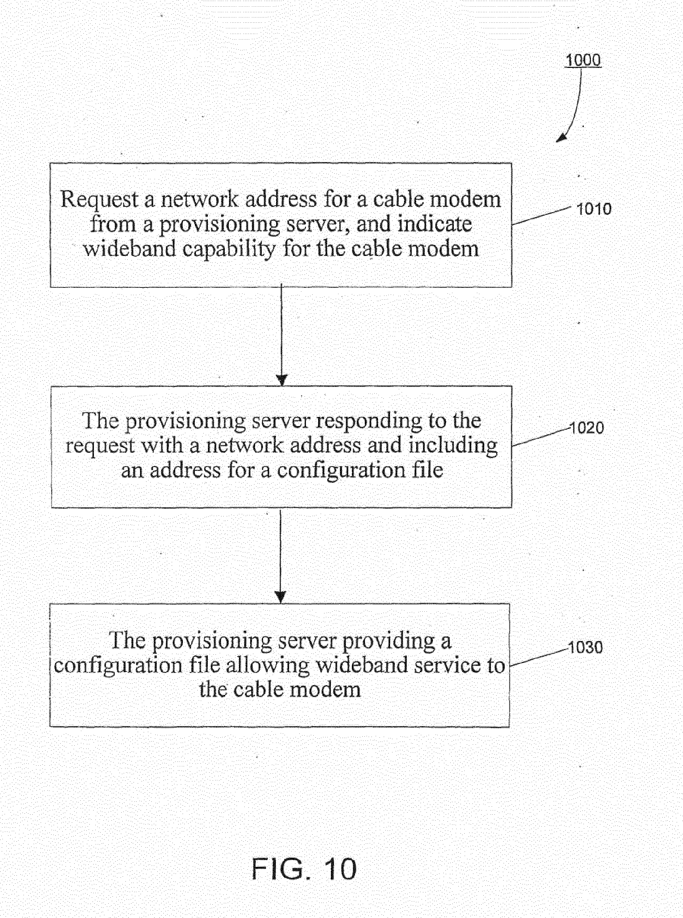

FIG. 10 illustrates a flow diagram showing a method 1000 for provisioning wideband cable. An embodiment may comprise a method 1000 of provisioning wideband service in a cable network including requesting a network address for a cable modem from a provisioning server in block 1010, and indicating wideband capability for the cable modem, the provisioning server responding to the request with a network address and including an address for a configuration file at block 1020, and the provisioning server providing a configuration file allowing wideband service to the cable modem at block 1030.

In an embodiment, the wideband capability is indicated by a dynamic host configuration protocol (DHCP) relay agent information option. In an embodiment, providing a configuration file that allows wideband service further comprises using a trivial file transfer protocol (TFTP). In yet another embodiment, providing a configuration file that allows wideband service further comprises providing a configuration file with a time length value that enables wideband capability.

Referring back to the embodiment illustrated in FIG. 2, as a cable modem begins registration, the cable modem may apply the relevant values already received from an initial TFTP exchange. This presents an interesting issue regarding how to define a TFTP file in such a way that it will apply to multiple upstreams even though only a single DHCP process happened. This is accomplished with type-length- value (TLV), which is an encoding method consisting of three fields, a first field indicating the type of an element, a second field indicating the length of an element, and a third field that contains an element's value. In an embodiment the provisioning server may be made aware the cable modem is wideband capable in the DHCP process. For example, a sub-option of a DHCP relay agent information option may allow the CM to indicate to the provisioning server that the CM is capable of running in a WB mode. In this embodiment, the provisioning server may then choose a WB configuration for that CM instead of a NB configuration.

A service flow or any type of information may be defined with a TLV. TLVs are stored in a configuration file. In an embodiment, all upstreams for a cable modem may be defined in a single configuration file. Furthermore, TLVs may be nested. For example, an embodiment may define 5 service flows. This embodiment may use 5 TLVs that define service flows and within each one of these 5 TLVs it may encapsulate sub-TLVs. An example sub-TLV that may be encapsulated in one of the 5 example TLVs may state a peak rate of 1 megabit for the related service flow. In this embodiment, a TLV may name service flows 1, 2, 3, 4, etc., and a sub-TLV may define the specific parameters for each service flow.

Additionally, a super TLV such as an upstream identifier, or SID identifier, etc., may be used to distinguish flows as not only a flow that belongs to a specific modem but a flow that belongs to a specific modem and a specific upstream. Higher orders of TLVs allow global identifiers to classify multiple service flows, this allows each individual service flow to have its normal definition. For example, an embodiment may have an upper level TLV service flow associated with multiple service flows, therefore it can stripe information across five upstreams and instead of having five TFTP files with five configurations, it can have one TFTP file and be logically separated into five pieces by adding an upper dimension or upper level TLV.

Lower level TLVs, on the other hand, allow differentiable control, for example to allow one stream to operate under conventional DOCSIS. This allows an embodiment high availability, for example if one upstream fails, an embodiment may stripe whatever it can over upstreams that are still available.

An example configuration file with multiple TLVs designating upstream encodings, downstream encodings, privacy rights, access control, a maximum number of CPE's, packet classifications, etc., may use the following format:
03 (Net Access Control) = 1
18 (Maximum Number of CPE) = 4
22 (Upstream Packet Classification Encoding Block)
   S0I (Classifier Reference) = 1
   S03 (Service Flow Reference) = 3
   S05 (Rule Priority) = 0
   S06 (Classifier Activation State) = 1
   S09 (IP Packet Encodings)
   S05 (IP Destination Address) = 011 001 002 001
   S06 (IP destination mask) = 255 255 255 000
22 (Upstream Packet Classification Encoding Block)
   S01 (Classifier Reference) = 1
   S03 (Service Flow Reference) = 3 - the aggregate flow service reference
   S05 (Rule Priority) = 0
   S06 (Classifier Activation State) = 1
   S09 (IP Packet Encodings)
   S06 (IP destination mask) = 255 255 255 000
   S05 (IP destination address) = 002 002 002 002
24 (Upstream Service Flow Encodings) - First SID for bonded group
   S01 (Service Flow Reference) = 1
   S06 (QoS Parameter Set Type) = 7
   S07 (Traffic Priority) = 0
   S08 (Max Sustained Traffic Rate) = 20000000
   S09 (Max Traffic Burst) = 1522
   S10 (Min Reserved Traffic Rate) = 0
   S12 (Timeout Active QoS Parms) = 0
   S13 (Timeout Admitted QoS Parms) = 0
   S15 (Service Flow Sched Type) = 2
   S14 (Maximum Concatenated Burst) = 1522
24 (Upstream Service Flow Encodings) - Second SID for bonded group
   S01 (Service Flow Reference) = 2
   S06 (QoS Parameter Set Type) = 7
   S08 (Max Sustained Traffic Rate) = 0
   S09 (Max Traffic Burst) = 1522
   S10 (Min Reserved Traffic Rate) = 10000000
   S12 (Timeout Active QoS Parms) = 0
   S13 (Timeout Admitted QoS Parms) = 0
   S15 (Service Flow Sched Type) = 2
   S16 (Request/Transmission Policy) = 00 00 00 e0
24 (Upstream Service Flow Encodings) - The aggregate flow
   S01 (Service Flow Reference) = 3
   S06 (QoS Parameter Set Type) = 7
   S08 (Max Sustained Traffic Rate) = 20000000
   S09 (Max Traffic Burst) = 1522
   S12 (Timeout Active QoS Parms) = 0
   S13 (Timeout Admitted QoS Parms) = 0
   S15 (Service Flow Sched Type) = 2
YY (Flow list mapping)
   S01 (service flow channel list) = 01 02
   S02 (aggregated flow) = 03
25 (Downstream Service Flow Encodings)
   S01 (Service Flow Reference) = 3
   S06 (QoS Parameter Set Type) = 7
   S07 (Traffic Priority) = 0
   S08 (Max Sustained Traffic Rate) = 10000000
   S09 (Max Traffic Burst) = 1522
   S10 (Min Reserved Traffic Rate) = 0
   S12 (Timeout Active QoS Parms) = 0
   S13 (Timeout Admitted QoS Parms) = 0
29 (Privacy Enable) = 1

Referring to this example configuration file, the segment at 24 (Upstream Service Flow Encodings), S01 (Service Flow Reference) = 3, may be considered a super TLV that encapsulates an aggregate flow. In an embodiment the TLV at 24 (Upstream Service Flow Encodings), S01 (Service Flow Reference) = 3, may be classified in an upstream channel configuration group.

In the present example, the 24 (Upstream Service Flow Encodings) with S01 (Service Flow Reference) = 3, may correspond to defining a service flow, and sub-TLVs may be options of a service flow. For example, sub-TLV S08 may be a maximum sustained traffic rate and S09 may be a burst size, etc.

Referring to the configuration file, 24 (Upstream Service Flow Encodings) with S01 (Service Flow Reference) = 1 may refer to a SID 1, and 24 (Upstream Service Flow Encodings) with S01 (Service Flow Reference) = 2 may refer to a SID 2. In this example, Service Flow Reference = 1 has a peak rate of 20,000,000 (for example, 20 megabits per second), Service Flow Reference = 2 has a peak rate of 10,000,000. These values represent individually thresholds for each flow. In the example configuration file, both of these flows are mapped into the aggregate flow, Service Flow Reference = 3, which is limited again to 20,000,000. This illustrates a way to manage separate and aggregated data streams. An embodiment may therefore allot bandwidth to a wideband channel. The registration processes illustrated in FIG. 2 and FIG. 3 allow a CM to fetch a correct CM configuration file from a provisioning server. The provisioning server, on the other hand, may provision CM service by using the TLVs the configuration file.

In one embodiment, a WCM may register using a conventional narrowband (NB) channel, and may subsequently add any number of other channels to its upstream channel list using a wideband (WB) configuration file. In this embodiment, each one of the individual upstreams goes through a standard process of scanning UCDs, selecting one, and then waiting for a MAP with an initial maintained slot. In this embodiment, each upstream may run its own keep alive process. In an embodiment, all UCDs and MAPs are sent on the downstream NB channel the modem registered on, however, in other embodiments a tunneled UCD/MAPs may be sent over a wideband downstream channel.

Various arrangements exist for configuration files to be used in provisioning of wideband service. For example, in one embodiment, one configuration file may be used and sent from a provisioning server to a CM and from the CM to a CMTS. In another embodiment, one configuration file may be sent from a provisioning server to a CM, but then two configuration files may be sent from a CM to a CMTS, in this embodiment, one of these configuration files is for NB and one is for WB. Another exemplary embodiment may use two configuration files, one for NB and one for WB.

In an embodiment, all upstream in a WB upstream group may acquire an upstream in parallel. In other embodiments, upstreams may be acquired individually. In some embodiments, for each channel under a wideband channel group TLV, a CM may start a UCD search on either a WB or a NB downstream. In this embodiment the CM will generally select an upstream that is not already in use, but may be provisioned otherwise, for example by an upstream channel ID TLV.

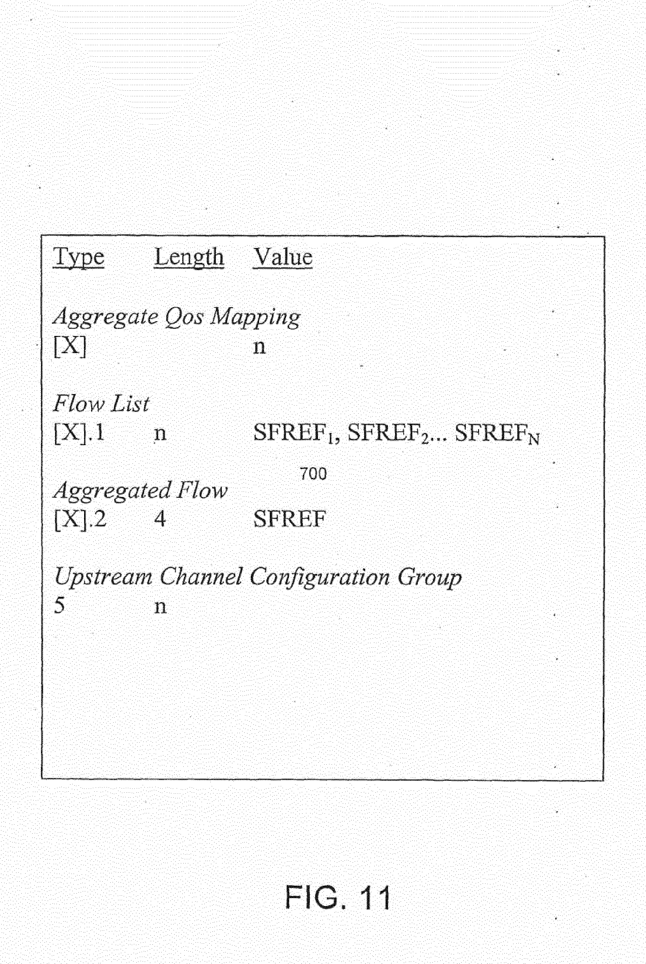

Example TLVs for a wideband configuration file include an Aggregate QoS Mapping TLV, a Flow List TLV, an Aggregated Flow TLV and an Upstream Channel Configuration Group TLV, as shown in FIG. 11.

Referring to FIG. 11, example upstream TLVs for a wideband configuration file are illustrated. The Aggregate QoS Mapping TLV is to map a set of flows onto a single service flow, for example to create a striped upstream configuration or to provide a hierarchical queueing policy. The Flow List TLV may be used to specify the list of a service flow references for all flows that are aggregated together. In an embodiment, SFREF availability may need to be checked when using this TLV. The Aggregated Flow TLV may be used to specify the flow reference of the flow that aggregates all the traffic form the flow list in a Flow List TLV. Lastly, the Upstream Channel Configuration Group TLV may be used to group several definitions for different upstreams into one TFTP file, for example by grouping the individual upstream definitions as sub-TLVs. Other example TLVs may include a TLV for tunneling information, or a TLV for a default service flow, as examples.

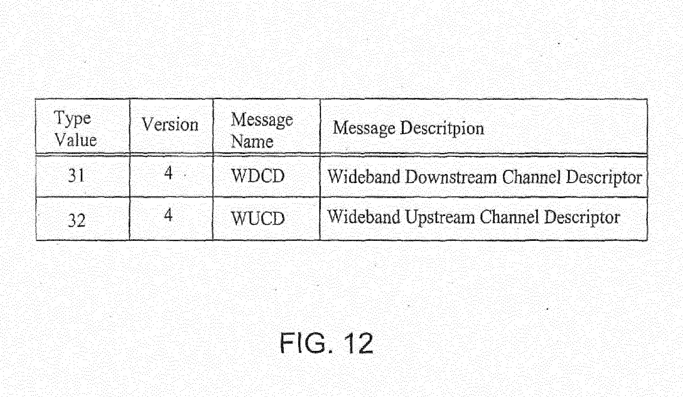

FIG. 12 illustrates additional MAC management message types that may be used in wideband provisioning. FIG. 12 includes an example wideband downstream channel descriptor (WDCD) and an example wideband upstream channel descriptor (WUCD), with associated type values, versions and message names. In an embodiment, these channel descriptors are periodically transmitted by a wideband capable CMTS to define the characteristics of a logical wideband downstream channel and the characteristics of a wideband upstream channel. In an embodiment, separate messages are transmitted for each wideband upstream channel that is currently available for use.

The WDCD may comprise a configuration change count that can be incremented by a CMTS whenever any of the values of the present channel descriptor change. In an embodiment, a CM can subsequent WDCDs with the same values and can determine channel operating parameters have not changed and may further be able to disregard the remainder of a message. An example WDCD may also include a bonded downstream channel ID. In an embodiment this ID may be a 16-bit identifier of a bonded downstream channel to which the present message refers. In an embodiment this identifier is arbitrarily chosen by a CMTS and may be unique only within the CMTS chassis. Other variables for a WDCD may be encoded as TLV parameters.

The WUCD may comprise a configuration change count that can be incremented by a CMTS whenever any of the values of the present channel descriptor change. In an embodiment, a CM can subsequent WUCDs with the same values and can determine channel operating parameters have not changed and may further be able to disregard the remainder of a message. An example WUCD may also include wideband upstream channel ID. In an embodiment this may identify the wideband upstream channel a message refers to. In an embodiment this identifier is arbitrarily chosen by a CMTS and may be unique only within a MAC-sublayer domain. Other variables for a WUCD may be encoded as TLV parameters.

For registration of a bonded channel, a CM may require additional steps over conventional registration methods. In an embodiment, after a WCM successfully locks on a non-bonded downstream, it may start collecting and selecting WDCDs and WUCDs. In this embodiment the WCM should define its WB capability during its DHCP discovery sequence. In an embodiment, before the WCM sends out a REG-REQ such as in FIG. 3 above, it may validate the WB downstream and upstream channels. In this embodiment the WCM should include the WB downstream channel ID and WB upstream channel ID in the REG-REQ.

In an embodiment, a bonded upstream service flow may consist of one or more non-bonded upstream service flows. A non-bonded upstream service flow ID may be associated with only one bonded upstream service flow. In one embodiment WCM registration, the association of non-bonded upstream service flows to bonded upstream service flows may be created in the configuration file and sent in a REG-REQ with reference SFIDs/SIDs. In the present embodiment, another option is to have only the bonded upstream service flow specified in the REG-REQ and allow a CMTS to fill in its own choice of SFIDs/SIDs in the REG-RSP.

In one embodiment, a WCM initiated dynamic service addition (DSA) or dynamic service change (DSC), may have an association of non-bonded upstream service flows to bonded upstream service flows that may be created and sent in a DSA/DSC-REQ with reference SFIDs/SIDs. An alternative embodiment provides the bonded upstream service flow can be specified in the DSA/DSC-REQ and the CMTS will fill in its own choice of SFIDs/SIDs in the DSA/DSC-RSP. In another embodiment, for a WCMTS initiated DSA/DSC, the association of non-bonded upstream service flows to bonded upstream service flows may be created and sent in a DSA/DSC-REQ with their SFIDs/SIDs.

In some embodiments, registration may assign service flow IDs (SFIDs) to a CM to match its provisioning. In this embodiment, the CM may use a temporary service ID to complete a number of protocol transactions prior to completion of registration. In the present embodiment, when the CMTS allocates a temporary SID for a CM that has at least one already, it may assign a QoS that prevents transmission of data packets since a CM uses its initial SID for initialization (DHCP, TFTP, etc). On reception of an initial ranging request, the CMTS may allocate a temporary SID and assign it to the CM for initialization use. When assigning provisioned SFIDs on receiving a registration request, the CMTS may re-use the temporary SID, assigning it to one of the service flows requested.

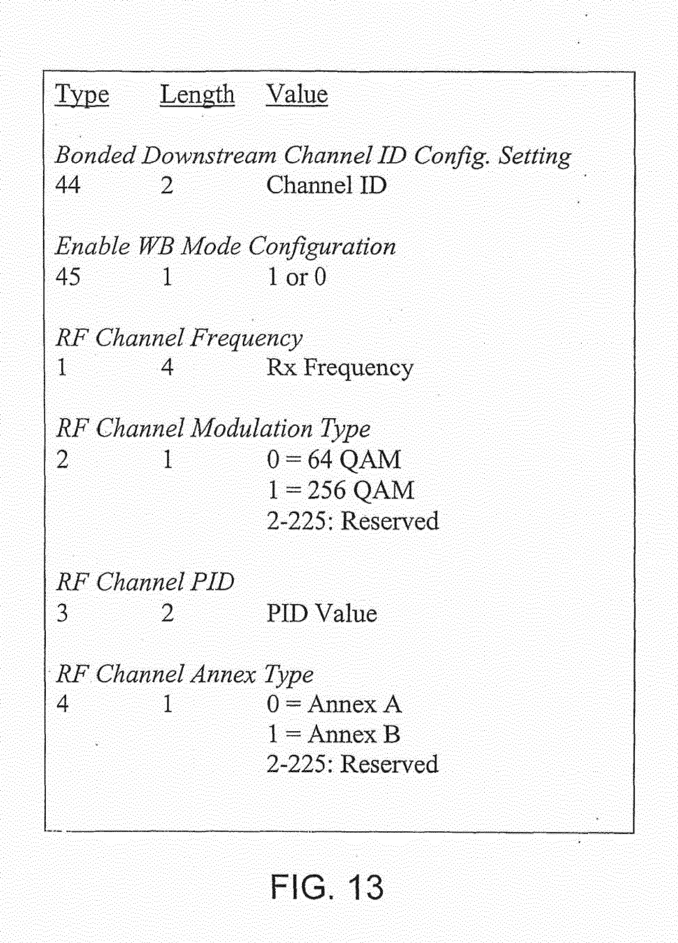

FIG. 13 illustrates example TLVs for configuration of a downstream. The example TLVs include, a Bonded Downstream Channel ID Configuration Setting TLV, an Enable Wideband Mode Configuration TLV, an RF Channel Frequency TLV, an RF Channel Modulation Type TLV, an RF Channel PID TLV, and an RF Channel Annex Type TLV. These TLVs are example TLVs for a configuration file for wideband provisioning of cable service. Additional functionality may be added in other TLVs.

The Bonded Downstream Channel ID Configuration Setting TLV may include the bonded downstream channel a CM uses. In an embodiment, the CM may monitor a defined non-bonded downstream channel until a WDCD message with this ID is found. In an embodiment this may function as an override for a bonded downstream channel selected during initialization.

The Enable Wideband Mode Configuration TLV may define if a CM is allowed to access a bonded downstream channel. In some embodiments this TLV may be determined by CM capability and provisioning, network topology and by availability of a bonded downstream channel, as examples.

The RF Channel Frequency TLV may specify the frequency of an RF channel that may make up a WB downstream channel that this WDCD refers to. In an embodiment, this is the center frequency of the downstream channel in Hertz and may be stored in a 32-bit binary number.

The RF Channel Modulation Type TLV in FIG. 13 may specify a channel modulation type of one of the RF channels that make up the WB downstream channel that this current WDCD refers. Example values would be 64 QAM or 256 QAM, and may be represented by a 0 and a 1 respectively.

The RF Channel PID TLV may be used to specify a PID value of MPEG packets of a downstream channel being transmitted on the current RF. The MPEG (Moving Pictures Experts Group) standard calls for the data to be transmitted in transport streams (TS), each identified by a unique program identifier (PID).

The final example TLV in FIG. 13 is the RF Channel Annex Type TLV which may specify a channel annex type of an RF channel.

A wideband upstream protocol may be developed. In one embodiment, the wideband upstream places identifiers into discrete portions of a data flow, and can therefore distribute the data in a streaming fashion over one or multiple channels.

Furthermore, an embodiment may place the data in one or multiple queues, and can parse arbitrary sizes of the data from the queue or queues, and send the arbitrary sizes of data to a remote device. In an embodiment, streaming allows multiple requests for bandwidth and as grants for bandwidth requests are returned, the streaming protocol can parse the data in a queue or queues relative to the grants, and therefore dissociate grants from requests. The protocol uses the identifiers to correctly manage the data at the receiving end.

Embodiments are not limited to any specific network or architecture. The cable embodiments described herein are for purposes of illustration, but embodiments are not so limited. Other example embodiments may be deployed over a digital subscriber line (DSL), in an Ethernet network or in a wireless environment, etc.

An embodiment may comprise an apparatus to receive multiple outstanding requests for upstream bandwidth, to send multiple grants for upstream bandwidth, and to receive data from a remote device in response to the grants for upstream bandwidth. An embodiment may be the remote device that sends multiple requests for upstream bandwidth, receives multiple grants for upstream bandwidth, and sends data in response to the grants for upstream bandwidth.

An embodiment may comprise a system including a remote device and an apparatus, the remote device to send multiple outstanding requests for upstream bandwidth, the apparatus to send multiple grants for upstream bandwidth, and the remote device to send data in response to the grants for upstream bandwidth.

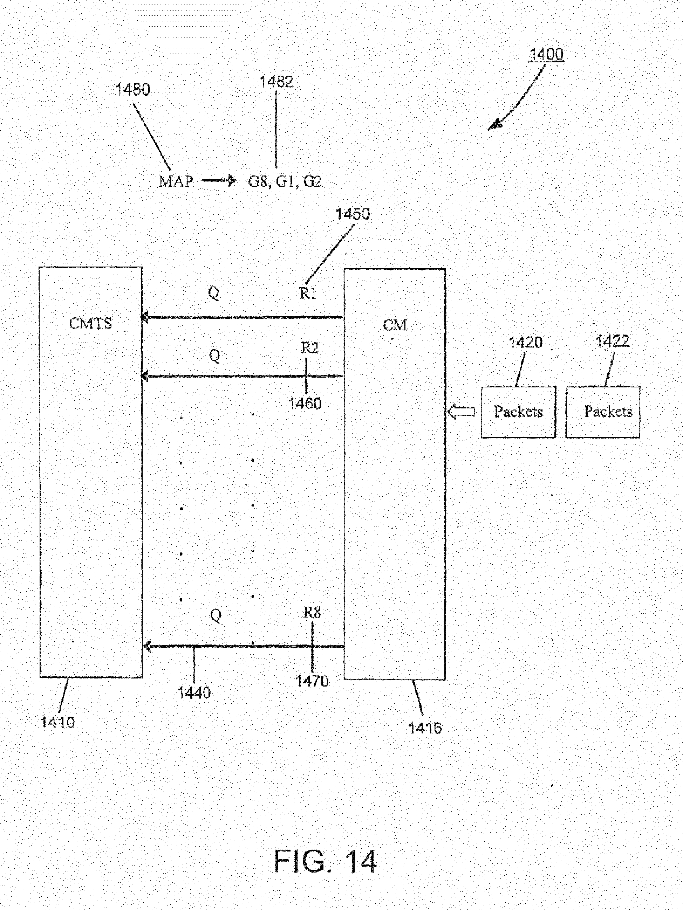

FIG. 14 illustrates a CM 1416 and CMTS 1410 with requests 1450, 1460 and 1470, and a MAP 1480 comprising grants 1482 for a wideband cable upstream protocol. The CM 1416 is coupled with the CMTS by multiple modulated channels. Conventional hardware utilizes QAMs 1440, but embodiments of the present invention are not so limited to any type of modulation, for example QPSK or other modulation types may be used.

Referring to FIG. 14, three QAMs are explicitly shown with dotted lines representing more QAMs. FIG. 14 includes packets 1420, 1422 flowing to CM 1416 comprising data that the CM 1416 will subsequently request upstream bandwidth from the CMTS 1410 to transmit the data in the packets to the CMTS 1410. The MAP 1480 in FIG. 14 is represented as containing grants 1482 including G8, G1 and G2.

Referring to the present embodiment, a cable modem may have multiple upstream QAMs, for example 8 QAMs. In the present embodiment, each QAM may get initialized as a DOCSIS upstream so it can transfer data over the cable service. Additionally, the DOCSIS initialization may happen individually for each QAM with each QAM terminating into a conventional CMTS. Since each QAM may initialize individually, the QAMs may be different speeds, or may even all be the same speed. In one embodiment, a CM 1416 may send data across multiple QAMs 1440 in the upstream to the CMTS 1410. An embodiment may overlay on top of a conventional DOCSIS narrowband upstream.

CM 1416 upstream transmissions typically require an arbitration protocol to sequence the upstream data and avoid collisions between multiple CMs 1416. This is different than downstream transmissions from a CMTS where there is a continuous transmission, for example, typically only one transmitter using simple queuing.

The DOCSIS provides a method of bandwidth allocation and timing. For example, CMs 1416 may send requests to a CMTS 1410 and the CMTS 1410 may send a MAP 1480 downstream to a CM 1416. The MAP 1480 typically describes bandwidth allocation and timing for any CM 1416 coupled with CMTS 1410.

In an embodiment, data may be sent between the CM 1416 and CMTS 1410 in data groups called mini-slots. Mini-slots may be groups of Forward Error Correction (FEC) blocks which are further comprised of bytes. Mini-slots are configurable but often are 8 or 16 bytes. A MAP 1480 includes information stating which CM 1416 is assigned to a mini- slot.

In an embodiment, mini-slots are assigned to CMs 1416 by SIDs. A SID is a dynamically assigned address to a cable modem and is generally 13 or 14 bits. SIDs are conventionally assigned when a CM 1416 comes online. After SIDs are assigned, a CMTS 1410 schedules CM 1416 bandwidth allocation and communicates the allocation to a CM 1416 with a MAP 1480.

Referring to FIG. 14, a CM 1416 is shown sending requests 1450, 1460 and 1470 to the CMTS 1410. In DOCSIS, CMs 1416 must request bandwidth to send upstream data. For example, if a CM 1416 has a 1500 byte packet to send, the CM 1416 sends a request packet to the CMTS 1410 and the CMTS 1410 may grant any amount of the 1500 bytes to send.

In an embodiment, a request from CMs 1416 may go through a contention slot where times set aside called "request intervals" when CMs 1416 may send a request 1450 to the CMTS 1410. If more than one CM 1416 sends a request 1450 to the CMTS 1410, the request 1450 does not get through. When a request 1450 are successful, the CMTS 1410 notifies the CM 1416. In the event that the request 1450 does not get through, the CM 1416 has to resend the request 1450. Once a CMTS 1410 gets a request 1450, it schedules the bandwidth for the associated CM 1416. Sent packets can contain a request called a "piggyback request" so the CM 1416 can avoid contention. In this regard, a CM 1416 can send multiple packets with piggyback requests and avoid contention.

Furthermore, if a CM 1416 has not sent data for a certain time, packets can get backed up. The next time the CM 1416 requests, it can take those packets, concatenate them together into a big concatenation frame and send a request for the concatenation frame.

An additional problem is that a CMTS may only schedule a portion of data requested to be sent. For example, a CM 1416 may request to send 2,000 bytes and the head end (CMTS 1410) may initially schedule only 1,000 bytes and wait to schedule any of the remaining bytes. A cable modem protocol may therefore provide for collecting or parsing of data, in this example, the DOCSIS protocol provides for concatenating and fragmenting frames. The concatenation and fragmentation may occur within a single QAM.

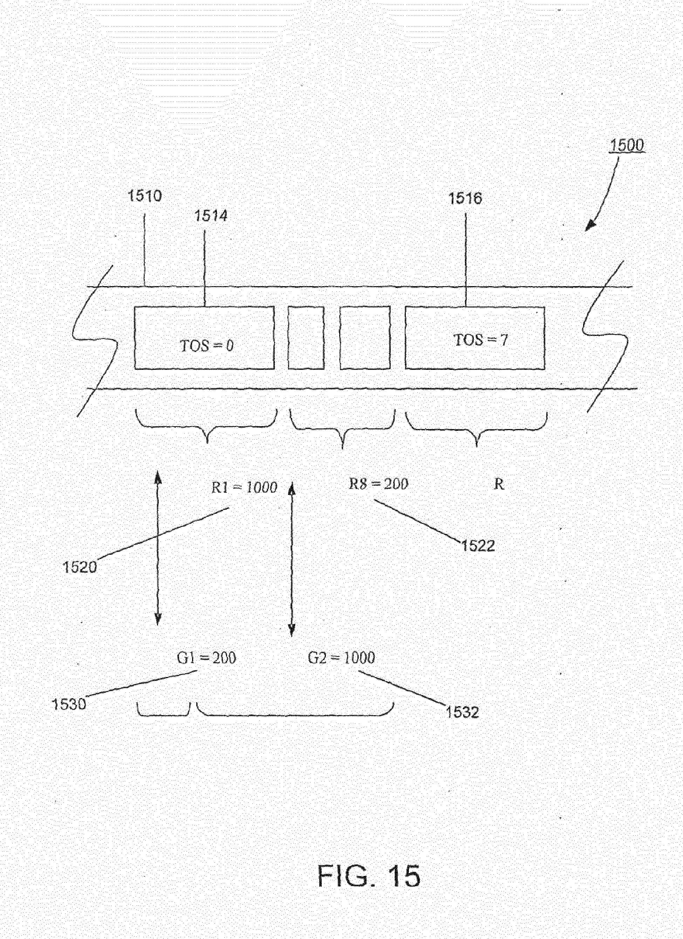

FIG. 15 illustrates a streaming protocol comprising packets 1514, 1516, etc., queued in a stream 1510, with requests 1520 and 1522 and upstream grants 1530 and 1532. In the present embodiment, packets are queued into one stream 1510. The streaming protocol in FIG. 15 is different than DOCSIS concatenation in that DOCSIS concatenation takes a fixed number of packets, puts a frame around the packets, and ships the frame. That is, DOCSIS concatenation takes whatever is in the queue.

The present embodiment can continually build the stream of packets 1514, 1516, etc. In a streaming protocol, bits are constantly being fed into one or multiple queues. As packets come in, a streaming protocol can identify blocks of packets, such as packets 1514, 1516, and generate requests 1520, 1522, for these packets.

In one embodiment the requests 1520, 1522, are launched on different upstreams. Referring back to the embodiment in FIG. 14, a CM 1416 may receive 8 upstreams at 10 megabits per second, which is 80 megabits per second of available bandwidth. In the present embodiment, the CM 1416 may send a request 1450, 1460 and 1470 on each upstream to the CMTS 1410 for 1000 bytes. The CMTS 1410 may then respond with a MAP 1480 containing grants 1482. Although the requests might go up Rl, R2 and R8, the grants 1482 might return in a different order, for example, grant 8, grant 1, grant 2, as shown.

In the present embodiment, a streaming protocol allows the CM 1416 to use. the first grant that comes back. In conventional DOCSIS, after a request is made on an upstream, a CM 1416 may get a grant for that upstream, and send data in that same upstream. In the present embodiment, the CM 1416 is going to take data from the front of the streaming protocol and place it in that upstream.

Referring back to the embodiment in FIG. 15, if the CM 1416 requested 1,000 bytes with request 1520, and 1500 bytes with request 1522, and the CM 1416 receives a grant 1530 for 200 bytes, the CM 1416 may carve 200 bytes from the front of the queue, or streaming protocol, and send it on the first grant 1530. This results in a dissociation of requests and grants.

With a dissociation of requests and grants, a CM 1416 can launch requests and when the first grants return, can send data out so that the transit delay through the upstreams is the lowest possible. Ultimately the number of bytes from requests will equal the number of bytes that get granted. In this embodiment, additional upstreams decrease delay as more grants may be received and the data may be parsed more and sent more quickly.

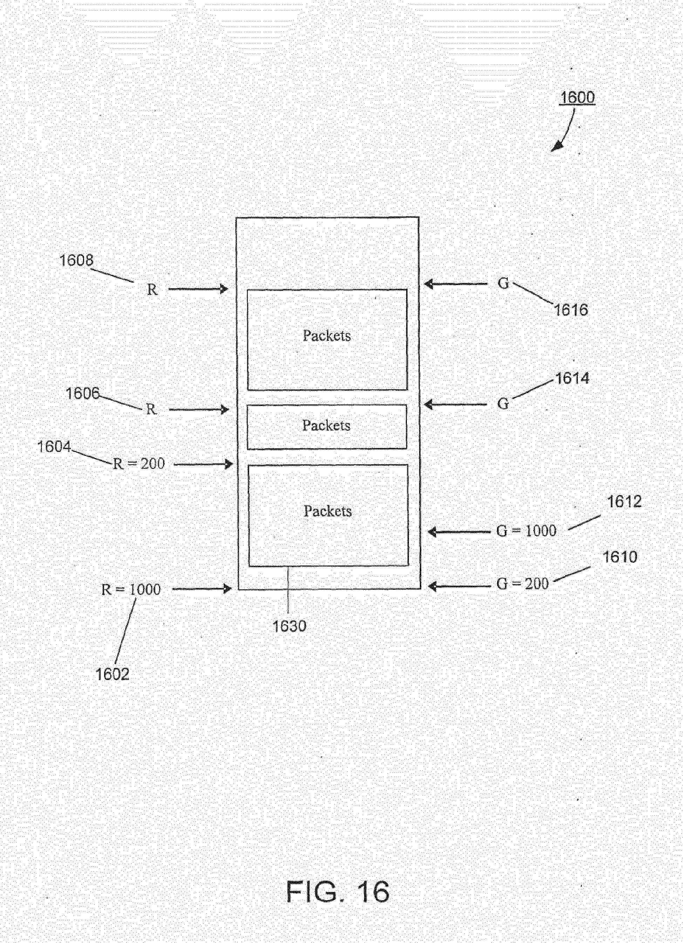

FIG. 16 illustrates an embodiment streaming protocol with a request/grant dissociation represented as a buffer 1600 containing packets 1630. The request and grant dissociation is represented here with a request pointer initially at request 1602 and a grant pointer, initially at grant 1610. In this example, when a request is launched, the request pointer moves up and when a grant is issued the grant pointer moves up.

According to this embodiment, the request pointer 1602 may signify a 1000 byte request, followed by the request pointer 1604 signifying a 200 byte request. Initially, the grant pointer 1610 is illustrated as representing a grant of 200 bytes, which allows a streaming protocol to carve 200 bytes from the packet 1630 at the bottom of the buffer 1600. The second grant 1612 may be 1000 bytes and the grant pointer can continue in this fashion up buffer 1600.

This example illustrates a dissociation between the first request 1602 that was for 1000 bytes and the first grant 1610 for 200 bytes. The request pointers may continue in this fashion completely dissociated from the grant pointer side of the buffer. Eventually, the request and grant pointers end up at the top of buffer 1600.

The DOCSIS protocol mandates one outstanding request at a time. That is, after a CM 1416 sends a request, it waits until it gets a grant. In the present embodiment, multiple outstanding requests are allowed before reception of a grant. Embodiments provide multiple streaming protocols that may dissociate requests and grants. For example, requests may be launched on either separate QAMs and/or separate SIDs within a QAM.

The DOCSIS specification disallows more than one outstanding request per SID, which allows a CM 1416 to set two SIDs and double its throughput as long as each SID carries independent traffic. Therefore, an embodiment may comprise an aggregated stream of traffic that may be spread across multiple physical channels which can then be reassembled at a far end, for example, by embedding sequence numbers into a data stream, such as in headers in the data stream. Additionally, because the association is not needed it is possible to use the streaming mode even with a single SID by allowing multiple outstanding grants at a time.

In an embodiment, a cable modem, or other transmit or receive device, can accelerate a request/grant cycle. An embodiment may do so even for a single SID on a single upstream in the manner described herein. Request and grant dissociation, described in the streaming protocol above, allows multiple outstanding requests or grants per SID. In an embodiment this dissociation further simplifies flow management to the amount of data transmitted, for example a number of bytes.

Since embodiments may use multiple outstanding requests, they can request in parallel multiple grants and more quickly drain a buffer or other storage. This may result in an overload of a contention channel since due to all the requests being sent on the channel, but a cable modem or other transmit or receive device may use a piggy back request approach and reduce the number of requests per channel. In an embodiment this may be based on a configuration policy. For example, a cable modem, or other device, may have 1,000 bytes of data to send and it can launch 4 substantially simultaneous requests for 250 bytes at the same time, or send 2 requests for 250 bytes and as grants come back piggyback more requests for the remaining data. Example embodiments may further append more than one request to a single data packet or may distribute the requests over multiple data packets, for example a request per data packet.

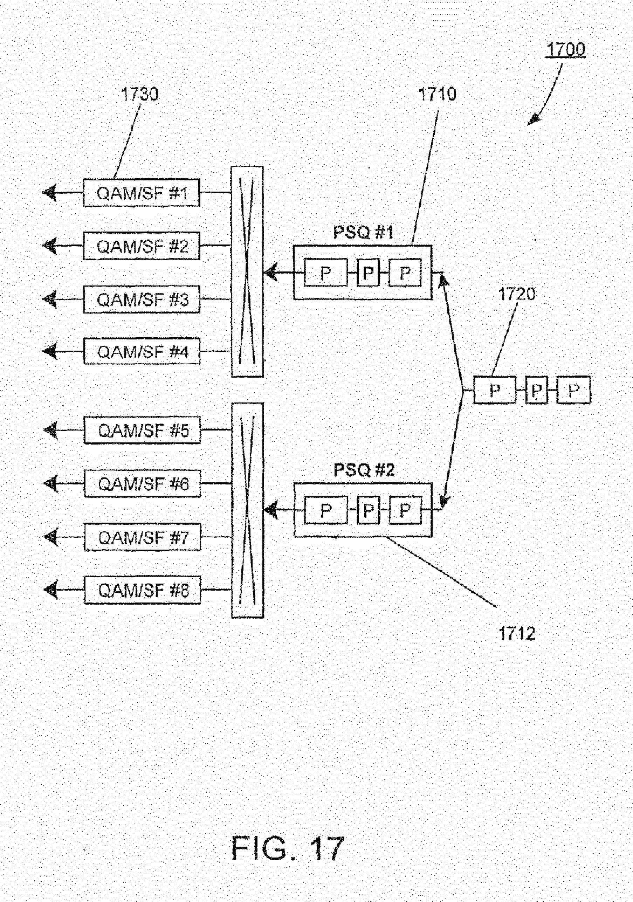

FIG. 17 illustrates an embodiment including an upstream 1700 using multiple upstream packet streaming queues (PSQs). Incoming packets 1720 are sorted into PSQs 1710 and 1712. An embodiment may comprise one PSQ per Quality of Service (QoS) queue. The packets 1720 may then be sent, or even parsed and sent, over one or more QAMs 1730 and/or service flows.

In the present embodiment, a CMTS may manage QoS at the CM. By allowing a CMTS to manage QoS at a CM, the CMTS can prevent head-of-line blocking, a scenario where a higher priority packet may get stuck behind a lower priority packet. A conventional unit for QoS provisioning is called a service flow (SF). For example, DOCSIS 1.1 allows multiple service flows per cable modem. This means that different types of traffic like data, voice, and video can be separately identified on the same cable modem in order to provide specialized QoS treatment relative to traffic needs. The output of the PSQ 1710 and 1712 may then be sent to a SF chosen from a group of SFs, which in turn are located on one QAM carrier 1730 chosen from within a group of upstream QAM carriers. In an embodiment there could be any number of PSQs 1710 and 1712, each with any number of QAM/SF combinations.

In one embodiment there is a request/grant state machine in the hardware of a cable modem. Another embodiment may allow one outstanding request per SID, and some embodiments may function a layer above that and utilize multiple SIDs/multiple QAMs. Some embodiments may re-specify the operation of request grant/state machines at both the cable modem and a CMTS, to utilize multiple outstanding requests on the same channel.

In a conventional approach, multiple outstanding requests on the same channel produced problems. Therefore the conventional approach could not acknowledge multiple requests effectively, for example, a problem could arise by dropping one request yet having an outstanding one with a different packet size. By placing an identifier with the data and parsing the data in arbitrary sizes, data can still be sent when grants are dissociated from requests.

A legacy CMTS might handle bandwidth requests but then transmit information in normal DOCSIS, that is, with packets. The present embodiment can pass information in arbitrary sizes and is therefore not restricted to passing packets. This allows passing blocks of parsed data from a streaming protocol. But by passing blocks of data, functionality must exist on the other end of a connection to take those blocks and turn them into packets again. One way to manage reassembly of packets is to tunnel each flow. Tunneling allows operating in the current environment with legacy equipment.

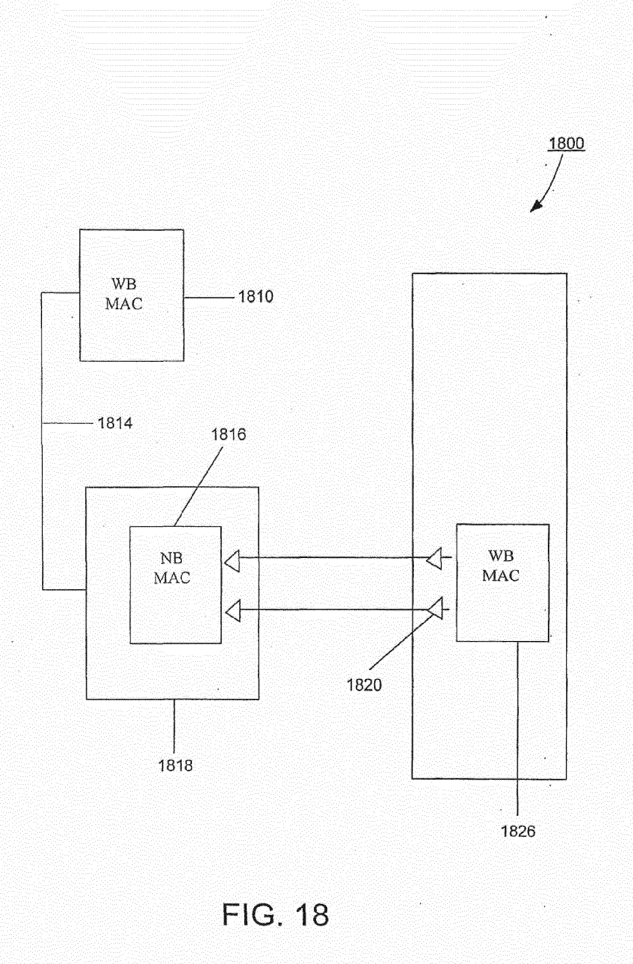

FIG. 18 illustrates a wideband upstream tunnel and reassembly engine. In an embodiment a wideband MAC 1826 may be coupled to a conventional DOCSIS narrowband upstream 1818, for example a narrowband MAC 1816, through one or a plurality of QAMs 1820. The narrowband upstream 1818 may then send data through a wideband tunnel 1814 to another wideband MAC 1810 comprising a reassembly engine.

The embodiment illustrated in FIG. 18 allows tunneling of an embodiment of the present invention through conventional architecture, which utilizes legacy silicon and reduces adoption costs. Referring to FIG. 18, the QAMs 1820 can connect an embodiment wideband MAC 1826 into a DOCSIS narrowband upstream 1818, and yet still have a completely separate wideband MAC 1810 connected transparently by a wideband upstream tunnel 1814 to a reassembly engine. This tunneling embodiment can in turn collect frames, or other data units, from different channels and reassemble them upstream. In another embodiment, downstream legacy hardware can also be used for tunneling embodiments of the present invention.

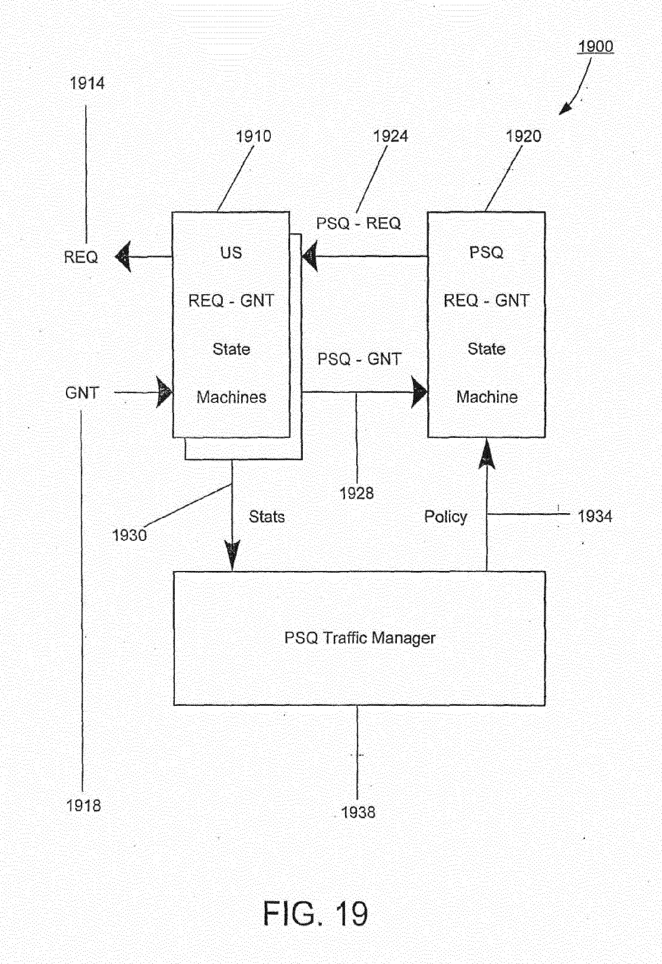

FIG. 19 illustrates upstream request/grant state machines 1910 and a packet streaming queue request/grant state machine 1920. In the present embodiment, as a PSQ begins to collect bytes, a PSQ state machine 1920 may issue PSQ requests (PSQ-REQs) 1924 to at least one DOCSIS request/grant state machine 1910. The DOCSIS request/grant state machine 710 can launch requests (REQs) 1914 to a CMTS, for example, to send a given number of bytes, and the CMTS may respond with grants (GNTs) 1918 to the DOCSIS request/grant state machine 1910. Conventionally, one outstanding REQ is permitted per Service Flow per upstream QAM carrier. The use of multiple upstream QAM/SF combinations allows multiple PSQ-REQ to be outstanding at any one time.

Referring to FIG. 19, a PSQ traffic manager 1938 may choose which upstream QAM channel and on which DOCSIS Service Flow to launch a REQ 1914. In an embodiment this may be based upon the perceived least busy upstream channel, upon some weighting criteria supplied by the WCMTS, or even a simple round-robin approach, as examples.

In another embodiment, the size of PSQ-REQ 1924 can be a configuration parameter from a wideband CMTS (WCMTS) to a wideband CM (WCM). PSQ-REQ 1924 size is allowed to not line up with a packet boundary. In some embodiments, it may be a fraction of a packet length, multiple packet lengths, both, etc. In other embodiments, it may be a predetermined value, a multiple of a predetermined value, or an arbitrary value, as examples. One choice is to have a value of PSQ-REQ 1924 chosen so that a wideband payload would fill upstream FEC Blocks efficiently.

In some embodiments, each PSQ, as it receives more packets, continues to generate PSQ-REQs 1924 without waiting for PSQ-GNTs 1928. In one embodiment each PSQ may generate PSQ-REQs 1924 up to a maximum number of outstanding PSQ-REQs allowed. Eventually a WCMTS sends back transmit opportunities within MAPs, where the MAPs comprise GNTs 1918.

In some embodiments, a streaming protocol as disclosed herein can be used for QOS. For example, multiple streaming protocols may be applied to data and voice traffic. In one embodiment, multiple streaming protocols may utilize different SIDs and launch unique sets of requests and grants. This embodiment would comprise output queueing QOS.

A conventional approach may receive packets and send them to different queues depending upon a type of service (TOS) value. For example, a conventional approach may use multiple TOS queues, for example queues 0 through 7, and couple them with an output queue where the output queue manages requests and grants with a request/grant state machine.

An embodiment utilizing QOS may receive packets into multiple streaming protocols, for example into queues 0 through 7 with each queue running a streaming protocol. In this embodiment, outputs may use different SIDs, or QAMs, and could launch requests on any of them. Therefore, upon reception of a grant, an embodiment may pull data from any desired stream, for example by different TOS streams or by differentiated services code points (DSCP), and apply it to the received grant. Data could therefore traverse different QOS pipes and may be reassembled and sequenced. Another embodiment may comprise multiple TOS pipes at a cable modem and at a CMTS.

In an embodiment, wideband queuing, such as with a streaming protocol as described herein, can be viewed as a form of hierarchal queuing. In this embodiment, each individual upstreams/flows may be classified as a first level of the hierarchy and the WB channel itself may be classified as a second level of the hierarchy. A hierarchal policy can define how much a single flow, for example a flow designated with a service flow identifier (SFID), can overload an upstream as well as how much an aggregate flow can be.

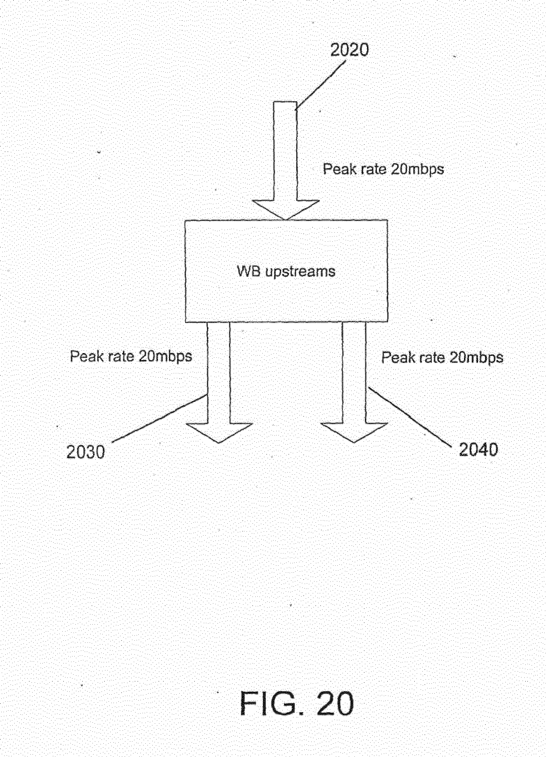

Referring to FIG. 20, an individual service flow 2020 may be striped across 2 SIDs 2030 and 2040, and be rate limited to 20 mbps. The individual service flows 2030 and 2040 may also be rate limited to 20 mbps. As a result, if one upstream is congested an embodiment can send 1 mbps on one upstream 19 mbps on the other.

All flows, individual and aggregates, may be defined using standard DOCSIS 2.0 TLVs. An aggregate QoS mapping TLV may associate a group of flows with an aggregate by associating a set of service flow references to an aggregated service flow reference.

To provision fine-grained control over striped data QoS at a CM, an embodiment may define the following QoS parameters and pass to the CM through a configuration file during initialization: lower hierarchy involving individual service flow QoS, such as for each SID resource, and a higher hierarchy such as an aggregate QoS across SIDs.

Referring to FIG. 20, in an embodiment, if both individual and aggregate rate limits of a two level hierarchy are defined, then each of the individual flows with SIDs may be rate limited to conform to the lower hierarchy while the aggregate rate limit may conform to an aggregated QoS across SIDs. QoS attributes, such as peak rate/committed rate/priority/burst size can therefore be defined for both individual service flow QoS and for the aggregate flow. Some embodiments may configure individual QoS, but no aggregate QoS rate limit or configure only aggregate QoS with no QoS on the individual flows. In other embodiments no QoS may actually be defined, therefore allowing the individual flows to consume link bandwidth.

In another embodiment, a CMTS may implement QoS. For example, a CMTS can impose a limit on aggregate traffic of a wideband channel when there is a need to share the same upstream, for example with traditional DOCSIS channels or other bonded channels. In an embodiment a bonded channel is a group of physically separated entities that can carry a single stream of data by means of "stripping" the data across multiple channels. In an embodiment, the entities may be physically separated by different frequencies or different wirings. Basic units that can be stripped include bytes, or frames or packet, as examples.

A hierarchical scheduling embodiment described above is not limited to any hierarchical policies, for example, it may be used for two different ISPs to share the same upstream, or it may be used for two logical channels to share an upstream. In an embodiment, a single CM can support multiple bonded channels. For example, a CM can have a 20 Mbps flow with no Committed Rate (Best effort), and a 50 Mbps flow with a Committed rate of 10 Mbps. In the present embodiment these flows may each be mapped to a separate group of SIDs, and striped independently.

In this embodiment, a CMTS controls bandwidth allocation for each bonded flow. A CM would only have to pick a SID that is available for transmission and do a DOCSIS 1.1 style rate shaping per SID and per bonded flow. In an embodiment, a flow provides a load balancing policy for a CM modem by preventing the CM from moving all of its traffic to one channel in case the other channels get congested.

In another embodiment, another option is to provide a cable modem with a "pipe" that is wide enough to accommodate both flows. For example, the pipe might have a CIR of 10 Mbps and a peak rate of 70 mbps (the sum of both peak rates). The individual flows comprising the pipe would have an aggregate CIR of 10 Mbps. In this embodiment, a CMTS manages the bandwidth allocation for the pipe and will ensure the pipe gets a 70 Mbps peak rate and a 10 Mbps committed rate.

Both techniques are valid ways of managing two flows. The first technique provides more discretionary control by a CMTS, and the second technique provides more discretionary control by a CM. The first technique might make more sense for basic CMs, while the second technique might make sense when the CM is actually an access router in a commercial deployment.

To utilize the added functionality of this streaming, or wideband, protocol, several SIDs may be configured. That is, all SIDs have to be coordinated between a CM and the CMTS. Therefore, to enable wideband upstream and bring it on line, an embodiment may register each upstream like a conventional upstream.

In another embodiment, the additional divisions and hierarchies of flow allows different control for each flow or over a large aggregated flow. For example, encryption may be needed on one upstream channel and not on another. Embodiments allow different keys per upstream, for example to selectively encrypt different channels based on some a user configuration.

In an embodiment, a method may comprise receiving multiple outstanding requests from a cable modem for upstream bandwidth to transmit data, sending multiple grants to a cable modem to transmit the data, and receiving and assembling the data from the cable modem. In some embodiments, the requests are received on separate QAMs. In some embodiments, the requests are received on separate SIDs within a QAM. In some embodiments, multiple requests are received for a single SID. The present embodiment may further comprise sending grants on separate SIDs within a QAM. An embodiment, may comprise hierarchical queueing with separate quality of service for each SID resource and an aggregate quality of service across a plurality of SIDs.

An embodiment may be an apparatus with a port to receive multiple outstanding requests from a cable modem for upstream bandwidth to transmit data, a port to send multiple grants to a cable modem to transmit the data, and a processor connect to the port, the processor to receive and assemble the data from the cable modem. The present embodiment may further comprise the processor being able to assemble striped data across multiple service flows. In this embodiment, the service flows may be combined with multiple QAMs to allow multiple requests to be outstanding.

Yet another embodiment may be an apparatus with means for receiving multiple outstanding requests from a cable modem for upstream bandwidth to transmit data, means for sending multiple grants to a cable modem to transmit the data, and means for receiving the data from the cable modem. In an embodiment, the means for receiving multiple outstanding requests further comprising means for receiving the requests on separate QAMs. In another embodiment, the means for receiving multiple outstanding requests further comprising means for receiving the requests on separate SIDs within a QAM.

In one embodiment, the means for sending multiple grants to a cable modem further comprising means for sending grants on separate SIDs within a QAM.

In the present embodiment, the means for sending multiple grants to a cable modem further comprising hierarchical queueing with separate quality of service for each SID resource and an aggregate quality of service across a plurality of SIDs.

In an embodiment, a network may comprise a CMTS, and a cable modem in communication with the cable modem termination system, where the cable modem can transmit data to the CMTS with a streaming protocol that sends multiple requests for upstream bandwidth to transmit data and receives multiple grants to transmit data, and transmits data to the CMTS as grants are received.

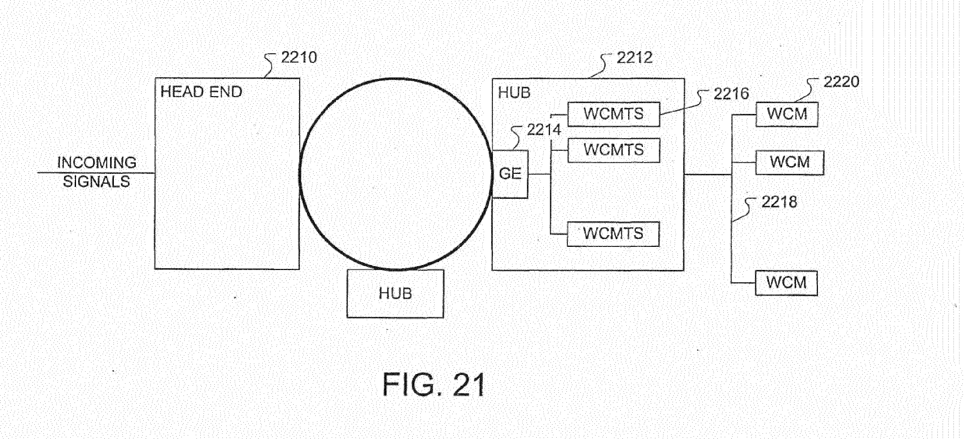

FIG. 21 shows an example of a cable network topology. In a cable network, the head end 2210 where all incoming signals are received or generated and typically frequency-division multiplexed (FDM) for 'downstream' transmission. Generally, the flow from the head end through any hubs 2212 to the customer cable modems such as 2220 is referred to as being downstream. Traffic flowing from the customer cable modems through any hubs back towards the head end is referred to as upstream.

The head end typically receives the incoming signals via high-speed, high-bandwidth connections, such as through a satellite link or a fiber-optic network. As the fiber-optic networks are generally located in larger metropolitan areas, these are sometimes referred to as 'metro' networks. The term 'metro' network has also come to mean the backbone network having high-speed, high-bandwidth links, whether they are fiber-optic or not. The head end may have several hubs attached to it, more than likely by fiber-optic cables. Between the hubs and the customers, the cabling is generally coaxial, or a hybrid fiber coaxial cable networks (HFC).

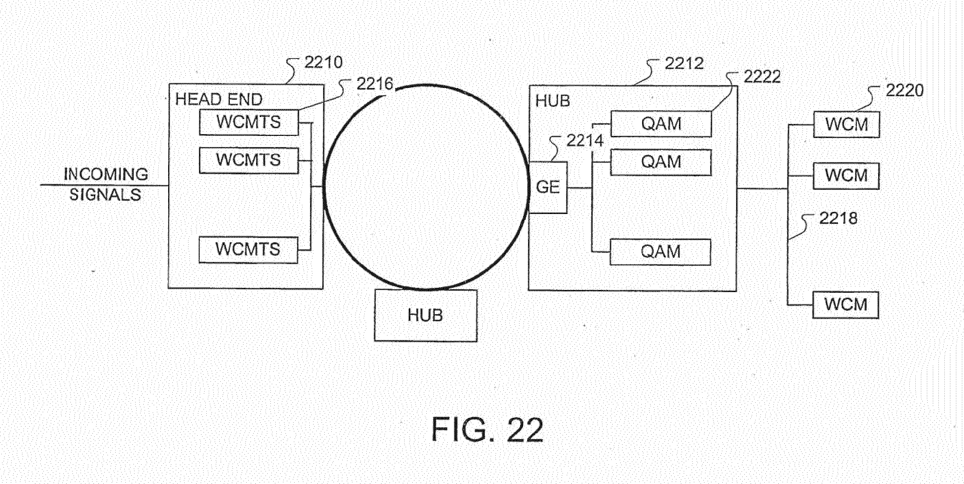

At the head end, or within a hub, a cable modem termination server 2216 interfaces between the metro network and the cable modem. In one embodiment, a GigabitEthernet (GigE) 2214 switch resides at the hub to switch traffic on the metro link to the various CMTSs used at the hub. The CMTS may also reside at the head end, if no hubs are used or if the system designer desires that the CMTS reside at the head end. An example of this is shown in FIG. 22.

In FIG. 22, the CMTS functionality 2216 resides at the head end 2210. The hub 2212 has a GigE switch 2214 and Quadrature Amplitude Modulators (QAM) 2222. QAMs are used to transmit the data to the cable modems after it is 'converted' to the appropriate format for the cable modems. Currently, the appropriate format is that specified in the Date Over Cable System Interface Specification (DOCSIS). Converting the incoming data to the DOCSIS format is one of the functions performed by the CMTS. The QAMs may co-reside with the CMTSs, or may be separated from that functionality as is shown in FIG. 22.

In FIGs. 21 and 22, the CMTSs and cable modems are wideband (WCMTS and WCM). Typically, the traffic between the CMTSs and the cable modems travels in channels along the coax or HFC conduit 2218. These channels are typically 5-8 MHz 'wide.' The QAMs take the cable data and modulate it into these channels for transmission across the coax or HFC conduit. These channels are sometimes referred to as 'narrowband' channels.

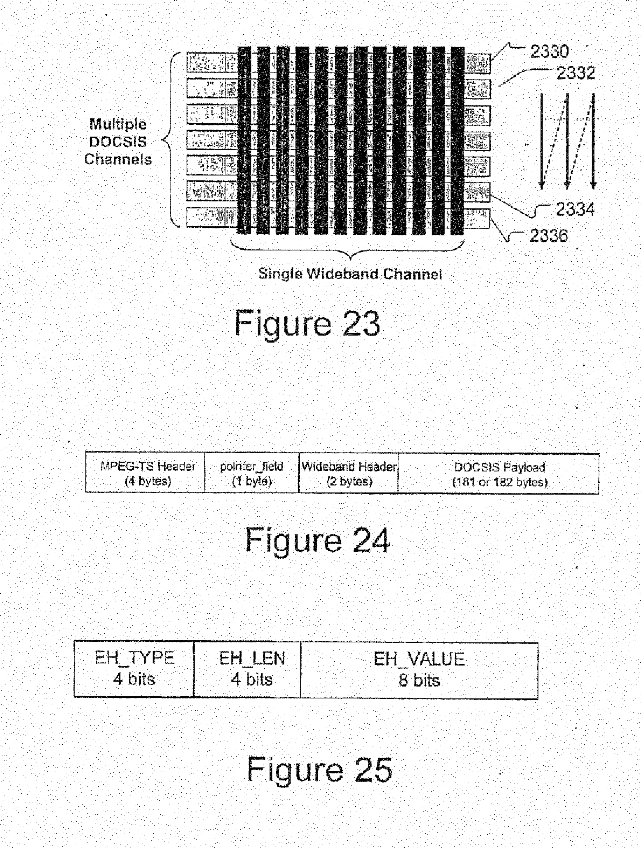

In one example, a wideband CMTS may use several narrowband channels to transmit the data. A wideband channel may be a collection of narrowband channels 'bonded' together, and may be referred to as 'channel bonding.' Referring to FIG. 23, it can be seen that the data for a wideband channel, shown as the vertical bars, is placed 'vertically' across several DOCSIS channels 2330-2336. This is in contrast to a narrowband channel that places data across one channel horizontally in time.

### MPEG Sequencing

The conversion from the data network format, such as Ethernet frames, to cable format may be accomplished using MPEG packets. The MPEG (Moving Pictures Experts Group) standard calls for the data to be transmitted in transport streams (TS), each identified by a unique program identifier (PID). For wideband cable data, a predefined PID is used to identify wideband data. When the data is received, the PID alerts the receiving device that the data is wideband data.

With the data being transmitted across several different DOCSIS channels, which correspond to MPEG transport streams, the packets may be demodulated 'out of order,' and therefore require some sort of identifier to allow the cable modem to reconstruct the data in the appropriate sequence. In one example, this is accomplished by a wideband header within the cable format header. In this particular example the cable format header is an MPEG header.

Providing a sequence number embedded in a MPEG-TS packet allows the transmitting wideband frame, such as processor 442 of FIG. 4, maximum flexibility of creating MPEG-TS formats as it needs to. It indicates that a new DOCSIS packet starts with the MPEG packet. It also keeps the reconstruction information for the receiving wideband framer in band for robustness.

Other alternative segmentations may also be used, such as at the bit, byte, MPEG-TS packet, or packet level. Because of the different segmentation availability, the data may be referred to as being formatted into transport segments, of which MPEG-TS is one embodiment. The MPEG-TS level is convenient because the bonding of the channels occurs at the transmission convergence layer. This allows the wideband protocol to be transparent to the traditional DOCSIS protocol. This transparency allows maximum re-use of existing DOCSIS environments.

In one example, the wideband CMTS takes the data received across the data network interface 440 and converts it into transport segments. In one embodiment, this may entail receiving Ethernet frames and converting them into MPEG-TS packets. A sequence identifier is provided for each packet. The packets are then transmitted across the wideband channel.

In one example, the sequence identifier is provided within a wideband header, which in turn is provided within an MPEG packet. An example of such a header is shown in FIG. 24. The MPEG-TS packet has two sections, a header and a payload. The MPEG-TS header is 4 bytes wide. The payload is further comprised of a DOCSIS payload, a pointer and a wideband header, to make up a 188-byte MPEG packet.

The pointer is 1 byte wide and is present when the Payload Unit Start Indicator (PUSI) bit is set to 1. This indicates that picture headers exist in the MPEG payload. If the PUSI bit is not set to 1, the pointer field is not present. The wideband header then resides at the fifth-sixth, or sixth-seventh, bytes of the MPEG packet, depending upon the PUSI bit.

A wideband control header has the most significant bit of the wideband header set to 1. A control message type is the remaining 7 bits of the first byte of the wideband header. The remaining portion of a wideband control packet header includes the control parameters. An important version of the control packet is a keep-alive control packet.

A wideband CMTS sends keep-alive control packets at periodic, programmed intervals to allow the receiving hardware to know that the channel is alive. These keep-alive packets are sent at or less than the maximum wideband keep-alive interval. Generally, keep-alive packets have a sequence number that monotonically increases from one event to the next.

During a keep-alive event, the WCMTS sends the keep-alive packet on every channel defined to belong to the wideband bundle. Keep-alives sent during the same event have the same keep-alive number. This will allow the skew between the member channels of the wideband channel to be measured. The receiving device then measures the network skew using the wideband control packets.

A wideband data header has the most significant bit of the wideband header set to 0. The data header is then comprised of a wideband sequence number that indicates the sequence of the MPEG packet within the wideband channel. Generally, these sequence numbers will monotonically increase for every subsequent MPEG packet within the bit stream, and wrap back to zero upon overflow. Twos compliment arithmetic may be used to determine if one sequence number is greater or less than another.

At the receiving end, the sequence numbers allow the packet to be reassembled in the correct order from all of the channels within the wideband channel. Because of channel skew between the member channels of the wideband channel, the packets may arrive out of sequence due to one channel being 'faster' than another. To make the MPEG-TS useful, the packets need to be reassembled in order. The sequence number allows this to happen.

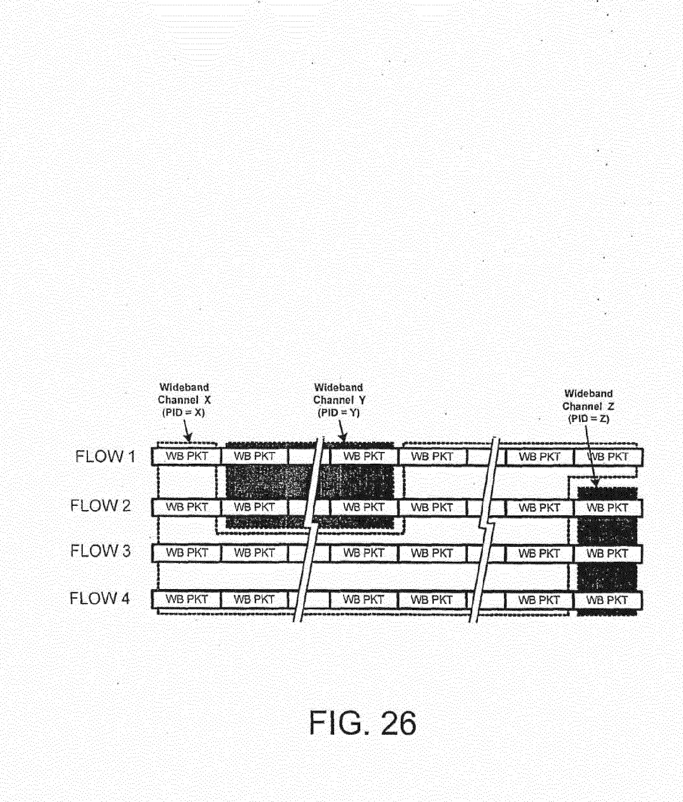

In addition to sending data across multiple QAMs in a wideband channel, it is possible to multiplex wideband data with narrowband, or 'traditional DOCSIS' channels, due to the unique wideband PID. In addition, the wideband PIDs may be operator-assigned, so wideband channels can be multiplexed with narrowband channels and other wideband channels. An example of this is shown in FIG. 26. The wideband packets (WB PKT) would be MPEG packets and the flows would MPEG Transport Streams. In other examples, the packets may be of other formats.

### Packet Bonding

Another example of a control header that allows sequenced packets to be transmitted across wideband channels is packet bonding, or multilink. Multilinking involves transmitted packets across multiple links, similar to Multilink PPP. In the embodiments here, the multilinks would be analogous to the narrowband channels within the wideband channels.

In a multilink packet bonding example, the packets are transmitted across multiple narrowband channels that form the wideband channel similar to the MPEG transport stream transmissions. The multilink packets also have sequencing information in their headers to allow the packets to be resequenced into the correct order at the receiving end. One difference between the MPEG packets and 'generic' packets is that the MPEG packets contain portions of the incoming packets, while packet bonding involves entire incoming packets.

In the MPEG sequencing examples, the term 'wideband headers' refers to the wideband header using MPEG sequence numbers to allow the receiving end to reconstruct the MPEG streams. The transport segments in the MPEG examples are MPEG transport segments. In packet bonding, the multilink extended header provides the identifier and sequence numbers. The transport segments in the packet bonding embodiments will be referred to as multilink packets, even though those packets may actually be MPEG packets

Indeed, in one example, the Ethernet frames may be received and translated into MPEG packets, but the payload of the MPEG packet is the entire packet received from the Ethernet frame. For this reason, the transport segments for packet bonding are referred to as multilink packets, to differentiate them from the MPEG transport segments that comprise partial packets.

An example of an extended multilink control header is shown in FIG. 25. The EH_TYPE has a value of 7 for a downstream multilink packet and a value of 8 for an upstream multilink packet. If the length of the multilink extended header (EHJLEN) is 0 bytes, this indicates that the packet is a multilink packet, but the sender has decided not to include sequence numbers. This could occur if the sender has determined that the sequence of packets does not matter, or that the packets have embedded sequence numbers. Further, by no using sequence numbers, the latency of the receive buffer is reduced in the event of missing packets.

If the length of the multilink extended header is 1 byte, this indicates that the packet is a multilink packet with a sequence number. The sequence number is unique per Ethernet Destination MAC Address (MAC DA). This rule applies to any unicast, multicast or broadcast MAC packets carried in the multilink bundle. This allows a small window of sequence numbers to be used at the receiver. The size of the window for both the downstream and the upstream is specified by the CMTS in a Multilink Descriptor message (MLD). This is shown below.

One embodiment is a provisioning server having a port to receive a request for a network address including an indication that a remote device is wideband capable. The provisioning server also has a processor to respond to the request with a network address and include an address for a configuration file and to provide a configuration file that allows wideband service. Another embodiment is a cable modem having a port to request a network address and indicate wideband capability. The cable modem also has a processor to receive a response to that request that includes a network address and an address for a configuration file. The processor also receives a configuration file and allows the cable modem to be configured for wideband service. Some examples may include a method to stream packets into a queue for an upstream transmission, send multiple requests for upstream bandwidth to transmit data from the queue and receiving multiple grants to transmit data, and transmit data from the queue to the upstream as grants are received. Another example may provide an apparatus comprising at least one request grant state machine to launch requests to transmit data to a cable modem termination station and receive grants to transmit data, and a packet streaming queue state machine to send packet streaming queue requests to the request grant state machine, wherein the packet streaming queue requests are managed separately from the requests to allow data in the packet streaming queue to be parsed in arbitrary data sizes. Some examples may provide a network comprising a cable modem termination system (CMTS), and a cable modem wherein the cable modem may transmit data to the CMTS with a streaming protocol that sends multiple requests for upstream bandwidth to transmit data and receives multiple grants to transmit data, and transmits data to the CMTS as grants are received. One example is a network device having a communications port to provide communication with a data network and a cable port to provide communication with a cable network across multiple channels. The network device also has a processor to receive data from the data network, format the data into packets for transmission across the multiple channels and provide an identifier to allow the packets to be reconstructed.

| Type Value | Version | Message Name | Message Descriptor |
|---|---|---|---|
| 31 | 4 | MLD | Multilink Descriptor |

The value of the sequence number increases by 1. When it exceeds 255, the value wraps back to 0.

### Session IDs

Having sequence numbers be unique per MAC DA allows a cable modem to limit the number of sequence numbers it needs to track. However, there could be issues when several receivers are monitoring the same wideband channel for data. By instituting a session ID (SID) for each cable modem, group of cable modems or even for each flow within traffic for a particular cable modem, it is possible for the cable modems to 'avoid' each other's traffic.

For example, assume a CMTS has 8 QAMs available, QAMs 1-8. There are two groups of users, each group comprised of users having the same type of cable modem. One group has cable modems that can monitor traffic on all 8 QAMs, and the other group has cable modems that can monitor traffic on only 4 of the QAMs, QAMs 1-4. This may be referred to as overlapping bonded channels, as both groups are using QAMS 1-4. The bonded channels may be transporting MPEG or multilink packets.

A session ID could be established for the cable modem group that can listen on all 8 QAMs and another for the cable modem group that can listen on only 4. This would allow the group that can only listen to 4 to ignore the data for the group that can listen to all 8 that is sent out on QAMs 1-4. The listening cable modems for a particular group of QAMs would 'hear' all data for all cable modems in the group, and then could analyze the packet for the MAC address of the intended cable modem.

Session IDs could also be used for each cable modem, allowing cable modems to listen only to the data intended for that particular cable modem. The other cable modems would not 'hear' that data, nor would the cable modems have to analyze the headers to determine the MAC address. In another embodiment, the session ID could be used to separate sequences associated with flows within the cable modem. For example, there could be several different data streams going to one cable modem. Each stream would have a separate session ID; this would allow the cable modem to have Session 1, sequence number 1-8, Session 2, sequence numbers 1-9, etc.

### Quality of Service

When several cable modems are sharing a connection, whether in the above scenario where some are listening on 4 QAMs and some on 8 or not, providing high enough bandwidth to each party to meet quality of service concerns becomes an issue. For example, using the scenario above, assume that each QAM has a capacity of 40 megabits per second (Mbps). The first group, listening to 4 QAMs, would have access to 160 Mbps. The second group would have twice that at 320 Mbps. However, there is physically only 320 Mbps available. The allocation of bandwidth between them would have to be handled in such a manner to allow each group and user's quality of service to be maintained.

The CMTS of FIG. 4 or 5 may use hierarchical queuing function (HQF) in which allocation of available bandwidth is performed using a hierarchy based upon the customer, the flow or the QAM used. For example, based upon the above scenario, the hierarchical scheduling function 446 of FIG. 5 may preferentially use QAMs 5-8 for the second group first, mitigating loads on the shared QAMs 1-4.

In addition, a shortest queue function (SQF) could be employed, such as SQF 448 of FIG. 5. A shortest queue function takes a packet as it comes in and moves it to the shortest queue. The combination of the HQF and the SQF may result in the packet being first allocated to a particular subset of QAMs, and then allocated to the QAM having the shortest queue being selected from that subset.

Current equipment may already have HQFs available. By separating the two functions into two components, it is convenient to add the SQF functionality to the existing HQF functionality. There is no need for a large, complicated, scheduling function. The use of this combined queuing allows the CMTS to account for both over and under utilization of the QAMs to maintain quality of service. The queuing function may be used both for MPEG transport streams and for packet bonded transport streams.

In this manner, the downstream wideband receiving hardware has a protocol by which it can reconstruct the data transmitted across the wideband channel. This will generally be done by the wideband CMTS, which may be a new device specifically able to perform this type of function, or a traditional CMTS that is upgraded with operating software that allows it to perform these functions. In the latter case, the invention may be embodied in an article of computer-readable media that contains instructions that, when executed, cause the device to perform the methods of the invention, where the computer is the CMTS.

Thus, although there has been described to this point a particular embodiment for a method and apparatus to provide a wideband protocol, it is not intended that such specific references be considered as limitations upon the scope of this invention except in-so-far as set forth in the following claims.

One embodiment may include a provisioning server having a port to receive a request for a network address including an indication that a remote device is wideband capable. The provisioning server also has a processor to respond to the request with a network address and include an address for a configuration file and to provide a configuration file that allows wideband service. Another embodiment may include a cable modem having a port to request a network address and indicate wideband capability. The cable modem also has a processor to receive a response to that request that includes a network address and an address for a configuration file. The processor also receives a configuration file and allows the cable modem to be configured for wideband service. Some embodiments of the present invention may include a method to stream packets into a queue for an upstream transmission, send multiple requests for upstream bandwidth to transmit data from the queue and receiving multiple grants to transmit data, and transmit data from the queue to the upstream as grants are received. Another embodiment may provide an apparatus comprising at least one request grant state machine to launch requests to transmit data to a cable modem termination station and receive grants to transmit data, and a packet streaming queue state machine to send packet streaming queue requests to the request grant state machine, wherein the packet streaming queue requests are managed separately from the requests to allow data in the packet streaming queue to be parsed in arbitrary data sizes. Some embodiments may provide a network comprising a cable modem termination system (CMTS), and a cable modem wherein the cable modem may transmit data to the CMTS with a streaming protocol that sends multiple requests for upstream bandwidth to transmit data and receives multiple grants to transmit data, and transmits data to the CMTS as grants are received. One embodiment may incldue a network device having a communications port to provide communication with a data network and a cable port to provide communication with a cable network across multiple channels. The network device also has a processor to receive data from the data network, format the data into packets for transmission across the multiple channels and provide an identifier to allow the packets to be reconstructed.

## Claims

1. A method for provisioning wideband service by a Cable Modem Termination System, CMTS, device (130) forming part of a system comprising a Cable Modem, CM, (140) and a provisioning server (110), the method comprising:
receiving, by the CMTS device (130) from the CM (140), a first data over cable service interface specification, DOCSIS, configuration file for narrowband registration of the CM (140) with the CMTS device (130);
receiving (730) by the CMTS device (130) from the CM (140), a second DOCSIS configuration file for wideband registration of the CM (140) with the CMTS device (130), the second DOCSIS configuration file comprising at least one type-length-value, TLV, that provides information that enables wideband capability, wherein each TLV consists of three fields indicating a type, a length and a value of an element, and was received by the CM from the provisioning server by an initial trivial file transfer protocol, TFTP, exchange following a dynamic host configuration protocol, DHCP, exchange between the CM and the provisioning server during which the CM (140) identified itself as being wideband capable using a DHCP relay agent information option; and
registering the CM (140) at the CMTS device (130) according to the first DOCSIS configuration file for narrowband service and according to the second DOCSIS configuration file for wideband service.

2. The method of claim 1, wherein the DHCP exchange comprises a DHCP request sent from the CM (140) to the provisioning server (110) and a DHCP response sent from the provisioning server (110) to the CM (140), and wherein the first DOCSIS configuration file received by the CMTS device is downloaded by the CM from the provisioning server using information included in the DHCP response.

3. The method of any preceding claim, wherein the CMTS device includes a narrowband CMTS device and a wideband CMTS device.

4. A system comprising:
a provisioning server;
a Cable Modem; and
a Cable Modem Termination System device;
wherein the provisioning server, the Cable Modem and the Cable Modem Termination System device are configured to perform the respective steps according to the method of any preceding claim.

## Patentansprüche

1. Verfahren zum Bereitstellen von Breitbanddienst durch ein CMTS-(Cable Modem Termination System)-Gerät (130), das Teil eines Systems ist, das ein Kabelmodem, CM (140) und einen Bereitstellungsserver (110) umfasst, wobei das Verfahren Folgendes beinhaltet:
Empfangen, durch das CMTS-Gerät (130) von dem CM (140), einer ersten DOCSIS-(Data Over Cable Service Interface Specification)-Konfigurationsdatei zur Schmalbandregistrierung des CM (140) beim CMTS-Gerät (130);
Empfangen (730), durch das CMTS-Gerät (130) von dem CM (140), einer zweiten DOCSIS-Konfigurationsdatei für die Breitbandregistrierung des CM (140) mit dem CMTS-Gerät (130), wobei die zweite DOCSIS-Konfigurationsdatei mindestens einen Typ-Längen-Wert, TLV, umfasst, der Informationen bereitstellt, die Breitbandfähigkeit ermöglichen, wobei jeder TLV aus drei Feldern besteht, die einen Typ, eine Länge und einen Wert eines Elements angeben, und durch das CM vom Bereitstellungsserver über einen anfänglichen TFTP-(Trivial File Transfer Protocol)-Austausch nach einem DHCP-(Dynamic Host Configuration Protocol)-Austausch zwischen dem CM und dem Bereitstellungsserver empfangen wurde, während dessen sich das CM (140) mittels einer DHCP-Relay-Agent-Informationsoption als breitbandfähig identifizierte; und
Registrieren des CM (140) am CMTS-Gerät (130) gemäß der ersten DOCSIS-Konfigurationsdatei für Schmalbanddienst und gemäß der zweiten DOCSIS-Konfigurationsdatei für Breitbanddienst.

2. Verfahren nach Anspruch 1, wobei der DHCP-Austausch eine vom CM (140) zum Bereitstellungsserver (110) gesendete DHCP-Anforderung und eine vom Bereitstellungsserver (110) zum CM (140) gesendete DHCP-Antwort umfasst, und wobei die vom CMTS-Gerät empfangene erste DOCSIS-Konfigurationsdatei durch das CM anhand von in der DHCP-Antwort enthaltenen Informationen vom Bereitstellungsserver heruntergeladen wird.

3. Verfahren nach einem vorherigen Anspruch, wobei das CMTS-Gerät ein Schmalband-CMTS-Gerät und ein Breitband-CMTS-Gerät umfasst.

4. System, das Folgendes umfasst:
einen Bereitstellungsserver;
ein Kabelmodem; und
ein CMTS-Gerät;
wobei der Bereitstellungsserver, das Kabelmodem und das CMTS-Gerät zum Ausführen der jeweiligen Schritte gemäß dem Verfahren nach einem vorherigen Anspruch konfiguriert sind.

## Revendications

1. Procédé d'approvisionnement d'un service à large bande par un dispositif de CMTS (« Cable Modem Termination System », système de terminaison de modem-câble) (130) faisant partie d'un système comportant un modem-câble, CM (« Cable Modem ») (140) et un serveur d'approvisionnement (110), le procédé comprenant :
la réception, par le dispositif de CMTS (130) en provenance du CM (140), d'un premier fichier de configuration DOCSIS (« data over cable service interface specification », spécification de l'interface du service de données par câble) pour un enregistrement en bande étroite du CM (140) avec le dispositif de CMTS (130) ;
la réception (730) par le dispositif de CMTS (130) en provenance du CM (140), d'un deuxième fichier de configuration DOCSIS pour un enregistrement en large bande du CM (140) avec le dispositif de CMTS (130), le deuxième fichier de configuration DOCSIS comprenant au moins un libellé TLV ("type-length-value", type-longueur-valeur) qui fournit des informations qui permettent une capacité en large bande, dans lequel chaque TLV consiste en trois champs indiquant un type, une longueur et une valeur d'un élément, et qui a été reçu par le CM en provenance du serveur d'approvisionnement par un échange initial en TFTP (« trivial file transfer protocol », protocole simplifié de transfert de fichiers) à la suite d'un échange en DHCP (« dynamic host configuration protocol », protocole de configuration dynamique des hôtes) entre le CM et le serveur d'approvisionnement durant lequel le CM (140) s'est identifié comme ayant une capacité en large bande en utilisant une option d'information d'agent de relais DHCP ; et
l'enregistrement du CM (140) au niveau du dispositif de CMTS (130) conformément au premier fichier de configuration DOCSIS pour une service en bande étroite et conformément au deuxième fichier de configuration DOCSIS pour un service en large bande.

2. Procédé de la revendication 1, dans lequel l'échange en DHCP comprend une requête en DHCP envoyée à partir du CM (140) jusqu'au serveur d'approvisionnement (110) et une réponse en DHCP envoyée à partir du serveur d'approvisionnement (110) jusqu'au CM (140), et dans lequel le premier fichier de configuration DOCSIS reçu par le dispositif de CMTS est téléchargé par le CM à partir du serveur d'approvisionnement en utilisant des informations incluses dans la réponse en DHCP.

3. Procédé de n'importe quelle revendication précédente, dans lequel le dispositif de CMTS inclut un dispositif de CMTS à bande étroite et un dispositif de CMTS à large bande.

4. Système comprenant :
un serveur d'approvisionnement ;
un modem-câble ; et
un dispositif de système de terminaison de modem-câble ;
dans lequel le serveur d'approvisionnement, le modem-câble et le dispositif de système de terminaison de modem-câble sont configurés pour réaliser les étapes respectives selon le procédé de n'importe quelle revendication précédente.
